# EUROPÄISCHE PATENTSCHRIFT

(11) **EP 4 041 496 B1**
(45) Veröffentlichungstag und Bekanntmachung des Hinweises auf die Patenterteilung: **10.07.2024**
(21) Anmeldenummer: 20780147.3
(22) Anmeldetag: 23.09.2020
(51) Int. Cl.: B25B 23/147

(54) **VERFAHREN ZUM EINLERNEN VON ANWENDUNGSABSCHALTUNGEN MIT HILFE DES AUFFINDENS VON CHARAKTERISTISCHEN SIGNALFORMEN**
METHOD FOR LEARNING APPLICATION SHUTDOWNS BY FINDING CHARACTERISTIC SIGNAL SHAPES
PROCÉDÉ D'APPRENTISSAGE D'ARRÊTS D'APPLICATIONS PAR LA RECHERCHE DE FORMES DE SIGNAUX CARACTÉRISTIQUES

(30) Priorität: 09.10.2019 DE 102019215415
(43) Veröffentlichungstag der Anmeldung: 17.08.2022
(73) Patentinhaber: Robert Bosch GmbH, 70442 Stuttgart (DE)
(72) Erfinder: ERBELE, Simon, 71154 Nufringen (DE); HERBERGER, Wolfgang, 70186 Stuttgart (DE)
(86) Internationale Anmeldenummer: PCT/EP2020/076484
(87) Internationale Veröffentlichungsnummer: WO 2021/069208

(56) Entgegenhaltungen:
- EP-A1- 0 753 377
- EP-A2- 0 480 380
- DE-A1- 102015 005 901

## Beschreibung

Die Erfindung betrifft ein Verfahren zum Betrieb einer Handwerkzeugmaschine, und eine zur Durchführung des Verfahrens eingerichtete Handwerkzeugmaschine. insbesondere betrifft die vorliegende Erfindung ein Verfahren zum Einschrauben oder Ausschrauben eines Gewindemittels mit einer Handwerkzeugmaschine.

### Stand der Technik

Aus der DE 10 2015 005901 A1 ist ein Verfahren zum Bewerten einer Schraubverbindung bekannt, mit den Schritten: Erfassen eines Werteverlaufs von zumindest einem Prozessparameter eines Einschraubvorgangs einer Schraube; Vorgegeben eines Toleranzbereichs für den Werteverlauf; nachträgliches Bewerten der Schraubverbindung mittels einer Datenverarbeitungsvorrichtung indem ermittelt wird, ob der erfasste Werteverlauf innerhalb des vorgegebenen Toleranzbereichs liegt.

Aus dem Stand der Technik, siehe beispielsweise EP 3 202 537 A1, sind Drehschlagschrauber zum Anziehen von Schraubenelementen, wie beispielsweise Gewindemuttern und Schrauben bekannt. Ein Drehschlagschrauber von diesem Typ umfasst beispielsweise einen Aufbau, bei welchem eine Schlagkraft in einer Drehrichtung durch eine Drehschlagkraft eines Hammers an ein Schraubenelement übertragen wird. Der Drehschlagschrauber, welcher diesen Aufbau hat, um-fasst einen Motor, einen durch den Motor anzutreibenden Hammer, einen Amboss, welcher durch den Hammer geschlagen wird, und ein Werkzeug. Der Drehschlagschrauber umfasst ferner einen Positionssensor, der eine Position des Motors erfasst, und eine Steuerung, die mit dem Positionssensor gekoppelt ist. Die Steuerung erfasst einen Aufprall des Aufprallmechanismus, berechnet einen Antriebswinkel des Ambosses, der durch den Aufprall verursacht wird, basierend auf der Ausgabe des Positionssensors und steuert den bürstenlosen Gleichstrommotor basierend auf dem Antriebswinkel.

Aus der US 9 744 658 ist auch ein elektrisch angetriebenes Werkzeug mit einem Schlagmechanismus bekannt, wobei der Hammer durch den Motor angetrieben wird. Der Drehschlagschrauber umfasst ferner eine Methode zum Aufzeichnen und Wiedergeben eines Motorparameters.

Bei der Verwendung von Drehschlagschraubern ist benutzerseitig ein hohes Maß an Konzentration auf den Arbeitsfortschritt erforderlich, um bei Wechsel bestimmter Maschinencharakteristiken, beispielsweise dem Ein- bzw. Aussetzen des Schlagwerkes, entsprechend zu reagieren, etwa den Elektromotor zu stoppen und/oder eine Veränderung der Drehzahl über den Handschalter durchzuführen. Da benutzerseitig oft nicht schnell genug oder nicht angemessen auf einen Arbeitsfortschritt reagiert werden kann, kann es bei der Verwendung von Drehschlagschraubern bei Einschraubvorgängen beispielsweise zum Überdrehen von Schrauben kommen, und bei Ausschraubvorgängen zum Herunterfallen von Schrauben, wenn diese mit zu hoher Drehzahl herausgedreht werden.

Es ist daher generell erwünscht, den Betrieb weitergehend zu automatisieren und dem Kunden zu helfen, einfacher einen vollständig abgeschlossenen Arbeitsfortschritt zu erzielen und zuverlässig reproduzierbare Ein- und Ausschraubvorgänge hoher Qualität zu gewährleisten. Ferner soll der Benutzer durch dem Arbeitsfortschritt angemessene, maschinenseitig ausgelöste Reaktionen oder Routinen des Gerätes unterstützt werden. Beispiele solcher maschinenseitig ausgelösten Reaktionen oder Routinen umfassen etwa ein Abschalten des Motors, eine Änderung der Motordrehzahl, oder das Auslösen einer Meldung an den Benutzer.

Die Bereitstellung von solchen intelligenten Werkzeugfunktionen kann unter anderem durch die Identifizierung des gerade anliegenden Betriebszustands erfolgen. Eine Identifizierung desselben wird im Stand der Technik, unabhängig von der Bestimmung eines Arbeitsfortschrittes oder des Status einer Anwendung, beispielsweise durch die Überwachung der Betriebsgrößen des Elektromotors, wie etwa Drehzahl und elektrischer Motorstrom, durchgeführt. Hierbei werden die Betriebsgrößen dahingehend untersucht, ob bestimmte Grenzwerte und/oder Schwellwerte erreicht werden. Entsprechende Auswertemethoden arbeiten mit absoluten Schwellwerten und/oder Signalgradienten.

Nachtteilig ist hierbei, dass ein fester Grenzwert und/oder Schwellwert praktisch nur für einen Anwendungsfall perfekt eingestellt sein kann. Sobald sich der Anwendungsfall verändert, verändern sich auch die dazugehörigen Strom- bzw. Drehzahlwerte bzw. deren zeitlichen Verläufe und eine Schlagerkennung anhand des eingestellten Grenzwertes und/oder Schwellwertes bzw. deren zeitliche Verläufe funktioniert nicht mehr.

So kann es vorkommen, dass beispielsweise eine auf der Erkennung des Schlagbetriebs basierende automatische Abschaltung bei einzelnen Anwendungsfällen bei einer Verwendung von selbstschneidenden Schrauben zuverlässig in verschiedenen Drehzahlbereichen abschaltet, allerdings in anderen Anwendungsfällen bei der Verwendung von selbstschneidenden Schrauben keine Abschaltung erfolgt.

Bei anderen Verfahren zur Bestimmung von Betriebsmodi bei Drehschlagschraubern werden zusätzliche Sensoren, etwa Beschleunigungssensoren, eingesetzt, um von Schwingungszuständen des Werkzeugs auf den gerade anliegenden Betriebsmodus zu schließen.

Nachteile dieser Verfahren sind zusätzlicher Kostenaufwand für die Sensoren sowie Einbußen in der Robustheit der Handwerkzeugmaschine, da die Anzahl der eingebauten Bauteile und elektrischen Verbindungen im Vergleich zu Handwerkzeugmaschinen ohne diese Sensorik steigt.

Ferner ist oft eine simple Information, ob das Schlagwerk arbeitet oder nicht, nicht ausreichend, um zutreffende Aussagen über den Arbeitsfortschritt treffen zu können. So setzt zum Beispiel beim Einschrauben bestimmter Holzschrauben das Drehschlagwerk schon sehr früh ein, während die Schraube noch nicht vollständig in das Material eingeschraubt ist, aber das geforderte Moment das sogenannte Ausrückmoment des Drehschlagwerks schon überschreitet. Eine Reaktion rein aufgrund des Betriebszustands (Schlagbetrieb und kein Schlagbetrieb) des Drehschlagwerks ist also für eine korrekte automatische Systemfunktion des Werkzeugs, wie beispielsweise ein Abschalten, nicht ausreichend.

Prinzipiell existiert die Problematik, einen Betrieb weitestgehend zu automatisieren auch bei anderen Handwerkzeugmaschinen wie etwa Schlagbohrmaschinen, sodass die Erfindung nicht auf Drehschlagschrauber begrenzt ist.

### Offenbarung der Erfindung

Die Aufgabe der Erfindung besteht darin, ein gegenüber dem Stand der Technik verbessertes Verfahren um Betrieb einer Handwerkzeugmaschine anzugeben, welches die oben genannten Nachteile zumindest teilweise behebt, oder zumindest eine Alternative zum Stand der Technik anzugeben. Eine weitere Aufgabe besteht darin, eine entsprechende Handwerkzeugmaschine anzugeben.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Erfindungsgemäß ist ein Verfahren zum Betrieb einer Handwerkzeugmaschine offenbart, wobei die Handwerkzeugmaschine einen Elektromotor aufweist. Dabei umfasst das Verfahren die Schritte:

| | |
|---|---|
| S1 | Bereitstellen von Vergleichsinformationen, umfassend die Schritte |
| S1a | Bereitstellen zumindest einer Modellsignalform, wobei die Modellsignalform einem Arbeitsfortschritt der Handwerkzeugmaschine zuordenbar ist; |
| S1b | Bereitstellen eines Schwellwertes der Übereinstimmung; |
| S2 | Ermitteln eines Signals einer Betriebsgröße des Elektromotors; |
| S3 | Vergleichen des Signals der Betriebsgröße mit der Modellsignalform und Ermitteln einer Übereinstimmungsbewertung aus dem Vergleich, wobei die Übereinstimmungsbewertung zumindest teilweise anhand des Schwellwertes der Übereinstimmung erfolgt; |
| S4 | Erkennen des Arbeitsfortschrittes zumindest teilweise anhand der in Verfahrensschritt S3 ermittelten Übereinstimmungsbewertung; |

wobei das Bereitstellen der Vergleichsinformationen zumindest teilweise auf der Basis eines Einlernvorgangs erfolgt.

Durch das erfindungsgemäße Verfahren wird ein Benutzer der Handwerkzeugmaschine effektiv bei der Erzielung reproduzierbar hochqualitativer Anwendungsergebnisse unterstützt. Insbesondere ist es einem Benutzer durch das erfindungsgemäße Verfahren einfacher und/oder schneller möglich, einen vollständig abgeschlossenen Arbeitsfortschritt zu erzielen. Dabei lernt der Schlagschrauber selbstständig oder teilweise selbstständig, an welchem Zeitpunkt er auf den Verlauf der Schlagerkennung reagieren muss

Einige Ausführungsformen der Erfindung lassen sich wie folgt kategorisieren:
1. Ausführungsformen, bei welchen der Schwellwert der Übereinstimmung durch einen Einlernvorgang im Sinne des Ausführens einer oder mehrerer Beispielanwendungen bereitgestellt wird;
2. Ausführungsformen, bei welchen das Modellsignal durch einen Einlernvorgang im Sinne des Ausführens einer oder mehrerer Beispielanwendungen bereitgestellt wird;
3. Ausführungsformen, bei welchen der Schwellwert der Übereinstimmung und/oder das Modellsignal durch einen Einlernvorgang im Sinne eines Einlesens eines oder mehrerer Schraubprofile bereitgestellt werden. Hierbei kann unter dem Einlesen eines Schraubprofils insbesondere das Einlesen eines beispielhaften Signals einer Betriebsgröße des Elektromotors durch die Handwerkzeugmaschine gemeint sein. Die Schraubprofile können zum Beispiel mit Hilfe einer Verbindung zum Internet eingelesen werden und/oder der Benutzer kann selbige durch das Durchführen von Beispielanwendungen selbst erstellen.

Alle Ausführungsformen haben den grundsätzlichen Vorteil, dass es möglich ist, Anwendungsfälle wie beispielsweise Serienverschraubungen schnell, reproduzierbar und auf die Anforderungen des Anwenders abgestimmt abzuschließen, wobei es zu einer Arbeitserleichterung für den Anwender kommt.

Beispielsweise müssen beim Zusammenbau von Möbeln, etwa Küchenmöbeln, viele gleiche Schrauben in ein zum Großteil gleichmäßiges Material geschraubt werden. Hierbei ist es für den Benutzer wichtig, dass die Schraubenköpfe möglichst gleichmäßig vertieft sind (im Sinne einer gleichbleibend hohen Arbeitsqualität). Durch die Erfindung ist es möglich, dem Anwender eine Hilfestellung zu geben, mit welcher eine gleichbleibende Arbeitsqualität bei möglichst geringem Aufwand möglich ist. Das heißt, es kann sichergestellt werden, dass alle Schrauben gleichmäßig tief eingeschraubt sind, beispielsweise durch eine automatische Reduzierung oder einen automatischen Stopp einer Motordrehzahl eines durch das erfindungsgemäße Verfahren gesteuerten Schlagschraubers.

Der Fachmann wird erkennen, dass das Merkmal der Modellsignalform eine Signalform eines kontinuierlichen Fortschrittes eines Arbeitsvorgangs einschließt. In einer Ausführungsform handelt es sich bei der Modellsignalform um eine zustandstypische Modellsignalform, die zustandstypisch für einen bestimmten Arbeitsfortschritt der Handwerkzeugmaschine ist. Beispiele für solche Arbeitsfortschritte umfassen das Aufliegen eines Schraubenkopfes auf einer Befestigungsunterlage, das freie Drehen einer gelösten Schraube, das Ein- oder Aussetzen eines Drehschlagwerks der Handwerkzeugmaschine, und/oder ein Schlag des Drehschlagwerkes ohne Weiterdrehen des geschlagenen Elementes bzw. der Werkzeugaufnahme

Der Ansatz zur Erkennung des Arbeitsfortschritts über Betriebsgrößen in den werkzeuginternen Messgrößen, wie beispielsweise die Drehzahl des Elektromotors, erweist sich als besonders vorteilhaft, da mit dieser Methode den Arbeitsfortschritt besonders zuverlässig und weitgehend unabhängig vom allgemeinen Betriebszustand des Werkzeugs bzw. dessen Anwendungsfall erfolgt.

Dabei wird im Wesentlichen auf, insbesondere zusätzliche, Sensoreinheiten zur Erfassung der werkzeuginternen Messgrößen verzichtet, wie beispielsweise eine Beschleunigungssensoreinheit, sodass im Wesentlichen ausschließlich das erfindungsgemäße Verfahren zur Erkennung des Arbeitsfortschritts dient.

Wie bereits an früherer Stelle erwähnt, umfasst in bestimmten Ausführungsformen der Erfindung der Einlernvorgang das benutzerseitige Ausführen einer Beispielanwendung und/oder das Einlesen zumindest einer Beispielanwendung in einen mit der Handwerkzeuge verbundenen oder in die Handwerkzeugmaschine integrierten Speicher. Unter Einlesen ist in diesem Zusammenhang das Einlesen eines oder mehrerer Schraubprofile zu verstehen, insbesondere eines beispielhaften Signals einer Betriebsgröße des Elektromotors. Die Schraubprofile können zum Beispiel mit Hilfe einer Verbindung zum Internet eingelesen werden.

Hierbei kann die zumindest eine Beispielanwendung ein Erreichen eines festgelegten Arbeitszustandes der Handwerkzeugmaschine umfassen, etwa ein Einsetzen oder Aussetzen eines Schlagbetriebs, insbesondere eines Drehschlagbetriebs, oder ein Erreichen einer bestimmten Einschraubtiefe eines mit der Handwerkzeugmaschine einzuschraubenden Verbindungsmittels.

In einigen Ausführungsformen der Erfindung wird der Schwellwert der Übereinstimmung zumindest teilweise auf Basis des Einlernvorgangs bereitgestellt, und der Einlernvorgang umfasst die folgenden Verfahrensschritte

| | |
|---|---|
| B1 | Bereitstellen zumindest einer Modellsignalform, wobei die Modellsignalform einem Arbeitsfortschritt der Handwerkzeugmaschine zuordenbar ist; |
| B2 | Ermitteln eines Signals einer Betriebsgröße des Elektromotors; |
| B3 | Vergleichen des Signals der Betriebsgröße mit der Modellsignalform zu einem Zeitpunkt eines Reduzierens einer Drehzahl des Elektromotors, insbesondere zu einem Zeitpunkt eines Stoppens der Handwerkzeugmaschine durch den Benutzer, und Ermitteln eines der Beispielanwendung zugeordneten Schwellwertes der Übereinstimmung. |

Weitere Ausführungsformen schließen ein, dass in Schritt B1 die zumindest eine Modellsignalform nach dem weiter oben beschriebenen erfindungsgemäßen Verfahren bereitgestellt wird.

Das erfindungsgemäße Verfahren kann ferner umfassen, dass der Einlernvorgang das Ausführen oder Einlesen von zumindest zwei Beispielanwendungen beinhaltet, bevorzugterweise einer Vielzahl von Beispielanwendungen, und dass der Einlernvorgang das Ermitteln eines Mittelwertes des Schwellwertes der Übereinstimmung aus den zwei oder mehr den Beispielanwendungen zugeordneten Schwellwerten der Übereinstimmung beinhaltet.

Auf diese Weise werden allenthalben anzutreffende Unregelmäßigkeiten im Schraubvorgang, wie etwa Variationen im Trägermaterial, Einschraubwinkel, Kraftausübung durch den Benutzer, und anderes mehr, statistisch gemittelt und somit in ihrem Effekt beim Einlernvorgang abgemildert.

Es kann ferner erfindungsgemäß vorgesehen sein, dass das Einlesen der zumindest einen Beispielanwendung das Einlesen eines beispielhaften Signals einer Betriebsgröße des Elektromotors durch die Handwerkzeugmaschine beinhaltet. Der spezifische Verlauf dieses beispielhaften Signals kann auch als "Schraubprofil" bezeichnet werden. Weiter oben wurde bereits darauf hingewiesen, dass die Schraubprofile zum Beispiel mit Hilfe einer Verbindung zum Internet eingelesen werden können, und/oder der Benutzer die Schraubprofile durch das Durchführen von Beispielanwendungen selbst erstellen kann.

In einigen Ausführungsformen der Erfindung umfasst das Verfahren des weiteren den Verfahrensschritt

| | |
|---|---|
| S5 | Ausführen einer ersten Routine der Handwerkzeugmaschine zumindest teilweise auf Basis des in Verfahrensschritt S4 erkannten Arbeitsfortschrittes. |

In diesen Ausführungsformen reagiert der Schlagschrauber selbständig oder teilweise selbständig auf eine Erkennung des Arbeitsfortschrittes, beispielsweise des Schlagzustandes.

Durch verschiedene Routinen ist es möglich, dem Anwender eine oder mehrere Systemfunktionalitäten anzubieten, mit denen er Anwendungsfälle einfacher und/oder schneller abschließen kann. Durch den erfindungsgemäß vorgesehenen Einlernvorgang ist das Verfahren hochgradig adaptiv und passt sich somit in hohem Maß an die Bedürfnisse des Benutzers an.

In einer Ausführungsform umfasst die erste Routine das Stoppen des Elektromotors unter Berücksichtigung zumindest eines definierten und/oder vorgebbaren, insbesondere durch einen Benutzer der Handwerkzeugmaschine vorggebbaren, Parameters. Beispiele für einen solchen Parameter umfassen einen Zeitraum, eine Anzahl von Umdrehungen des Elektromotors, eine Anzahl von Umdrehungen der Werkzeugaufnahme, einen Drehwinkel des Elektromotors, und eine Anzahl von Schlägen des Schlagwerks der Handwerkzeugmaschine.

In einer weiteren Ausführungsform umfasst die erste Routine eine Änderung, insbesondere eine Reduzierung und/oder eine Erhöhung, einer Drehzahl des Elektromotors. Eine solche Änderung der Drehzahl des Elektromotors kann beispielsweise mittels einer Veränderung des Motorstroms, der Motorspannung, des Akkustroms, oder der Akkuspannung erreicht werden, oder durch eine Kombination dieser Maßnahmen.

Bevorzugterweise ist eine Amplitude der Änderung der Drehzahl des Elektromotors durch einen Benutzer der Handwerkzeugmaschine definierbar. Alternativ oder zusätzlich hierzu kann die Änderung der Drehzahl des Elektromotors auch durch einen Zielwert vorgegeben werden. Der Begriff der Amplitude soll in diesem Zusammenhang auch allgemein im Sinne einer Höhe der Änderung verstanden und nicht ausschließlich mit zyklischen Prozessen assoziiert werden.

In einer Ausführungsform erfolgt die Änderung der Drehzahl des Elektromotors mehrfach und/oder dynamisch, insbesondere zeitlich gestaffelt und/oder entlang einer Kennlinie der Drehzahländerung und/oder anhand des Arbeitsfortschritts der Handwerkzeugmaschine, wobei die Änderung der Drehzahl zumindest teilweise anhand des Einlernvorgangs auf Basis der Beispielanwendungen bestimmt wird.

Grundsätzlich können als Betriebsgrößen, welche über einen geeigneten Messwertgeber aufgenommen werden, verschiedene Betriebsgrößen in Frage kommen. Dabei ist es besonders vorteilhaft, dass erfindungsgemäß diesbezüglich kein zusätzlicher Sensor notwendig ist, da diverse Sensoren, wie beispielsweise zur Drehzahlüberwachung, vorzugsweise Hallsensoren, bereits in Elektromotoren eingebaut sind.

Vorteilhafterweise ist die Betriebsgröße eine Drehzahl des Elektromotors oder eine mit der Drehzahl korrelierende Betriebsgröße. Durch das starre Übersetzungsverhältnis von Elektromotor zum Schlagwerk ergibt sich beispielsweise eine direkte Abhängigkeit von Motordrehzahl zur Schlagfrequenz. Eine weitere denkbare mit der Drehzahl korrelierende Betriebsgröße ist der Motorstrom. Als Betriebsgröße des Elektromotors sind auch eine Motorspannung, ein Hallsignal des Motors, ein Batteriestrom oder eine Batteriespannung denkbar, wobei als die Betriebsgröße auch eine Beschleunigung des Elektromotors, eine Beschleunigung einer Werkzeugaufnahme oder ein Schallsignal eines Schlagwerks der Handwerkzeugmaschine denkbar ist.

In einigen Ausführungsform wird das Signal der Betriebsgröße in Verfahrensschritt S2 als Zeitverlauf von Messwerten der Betriebsgröße aufgenommen, oder als Messwerte der Betriebsgröße als eine mit dem Zeitverlauf korrelierende Grö-βe des Elektromotors aufgenommen, beispielsweise eine Beschleunigung, einen Ruck, insbesondere höherer Ordnung, eine Leistung, eine Energie, ein Drehwinkel des Elektromotors, ein Drehwinkel der Werkzeugaufnahme oder eine Frequenz.

In der letztgenannten Ausführungsform kann gewährleistet werden, dass sich eine gleichbleibende Periodizität des zu untersuchenden Signals unabhängig von der Motordrehzahl ergibt.

Wird das Signal der Betriebsgröße in Verfahrensschritt S2 als Zeitverlauf von Messwerten der Betriebsgröße aufgenommen, erfolgt in einem dem Verfahrensschritt S2 folgenden Schritt S2a auf Basis eines starren Übersetzungsverhältnisses des Getriebes eine Transformation des Zeitverlaufs der Messwerte der Betriebsgröße in einen Verlauf der Messwerte der Betriebsgröße als eine mit dem Zeitverlauf korrelierende Größe des Elektromotors. Somit ergeben sich wiederum dieselben Vorteile wie bei der direkten Aufnahme des Signals der Betriebsgröße über die Zeit.

Bevorzugterweise wird einem Benutzer der Handwerkzeugmaschine ein Arbeitsfortschritt der ersten Routine unter Verwendung einer Ausgabevorrichtung der Handwerkzeugmaschine ausgegeben. Unter Ausgabe mittels der Ausgabevorrichtung kann insbesondere die Anzeige oder Dokumentation des Arbeitsfortschritts verstanden werden. Hierbei kann eine Dokumentation auch das Auswerten und/oder Speichern von Arbeitsfortschritten sein. Dies umfasst beispielsweise das Speichern mehrfacher Schraubvorgänge auch in einem Speicher.

In einer Ausführungsform sind die erste Routine und/oder charakteristische Parameter der ersten Routine über eine Anwendungssoftware ("App") oder eine Benutzerschnittstelle ("Human-Machine Interface", "HMi") durch einen Benutzer einstellbar und/oder darstellbar.

Ferner kann in einer Ausführungsform das HMI an der Maschine selbst angeordnet sein, während in anderen Ausführungsformen das HMI an externen Geräten. beispielsweise einem Smartphone, einem Tablet, oder einem Computer angeordnet sein.

In einer Ausführungsform der Erfindung umfasst die erste Routine eine optische, akustische, und/oder haptische Rückmeldung an einen Benutzer.

Bevorzugterweise ist die Modellsignalform ein Schwingungsverlauf, etwa ein Schwingungsverlauf um einen Mittelwert, insbesondere ein im Wesentlichen trigonometrischer Schwingungsverlauf. Dabei kann die Modellsignalform beispielsweise einen idealen Schlagbetrieb des Hammers auf den Amboss des Drehschlagwerks darstellen, wobei der ideale Schlagbetrieb bevorzugterweise ein Schlag ohne Weiterdrehen der Werkzeugspindel der Handwerkzeugmaschine ist.

In einer Ausführungsform der Erfindung wird in Verfahrensschritt S3 das Signal der Betriebsgröße mittels eines Vergleichsverfahrens dahingehend verglichen, ob zumindest ein vorgegebener Schwellwert der Übereinstimmung erfüllt wird.

Bevorzugterweise umfasst das Vergleichsverfahren zumindest ein frequenzbasiertes Vergleichsverfahren und/oder ein vergleichendes Vergleichsverfahren.

Dabei kann zumindest teilweise mittels dem frequenzbasierten Vergleichsverfahren, insbesondere einer Bandpassfilterung und/oder einer Frequenzanalyse, die Entscheidung getroffen werden, ob ein zu erkennender Arbeitsfortschritt im Signal der Betriebsgröße identifiziert wurde.

In einer Ausführungsform umfasst das frequenzbasierte Vergleichsverfahren zumindest die Bandpassfilterung und/oder die Frequenzanalyse, wobei der vorgegebene Schwellwert zumindest 90%, insbesondere 95%, ganz insbesondere 98%, eines vorgegebenen Grenzwerts beträgt.

In der Bandpassfilterung wird beispielsweise das aufgenommene Signal der Betriebsgröße über einen Bandpass, dessen Durchlassbereich mit der Modellsignalform übereinstimmt, gefiltert. Eine entsprechende Amplitude im resultierenden Signal ist bei Vorliegen des maßgeblichen zu erkennenden Arbeitsfortschritts zu erwarten. Der vorgegebene Schwellwert der Bandpassfilterung kann daher zumindest 90%, insbesondere 95%, ganz insbesondere 98%, der entsprechenden Amplitude im zu erkennenden Arbeitsfortschritt sein. Der vorgegebene Grenzwert kann hierbei die entsprechende Amplitude im resultierenden Signal eines idealen zu erkennenden Arbeitsfortschritts sein.

Durch das bekannte frequenzbasierte Vergleichsverfahren der Frequenzanalyse kann die zuvor festgelegte Modellsignalform, beispielsweise ein Frequenzspektrum des zu erkennenden Arbeitsfortschrittes in den aufgenommenen Signalen der Betriebsgröße gesucht werden. In den aufgenommenen Signalen der Betriebsgröße ist eine entsprechende Amplitude des zu erkennenden Arbeitsfortschrittes zu erwarten. Der vorgegebene Schwellwert der Frequenzanalyse kann zumindest 90%, insbesondere 95%, ganz insbesondere 98%, der entsprechenden Amplitude im zu erkennenden Arbeitsfortschritt sein. Der vorgegebene Grenzwert kann hierbei die entsprechende Amplitude in den aufgenommenen Signalen eines idealen zu erkennenden Arbeitsfortschritts sein. Dabei kann eine angemessene Segmentierung des aufgenommenen Signals der Betriebsgröße notwendig sein.

In einer Ausführungsform umfasst das vergleichende Vergleichsverfahren zumindest eine Parameterschätzung und/oder eine Kreuzkorrelation, wobei der vorgegebene Schwellwert zumindest 40% einer Übereinstimmung des Signals der Betriebsgröße mit der Modellsignalform beträgt.

Das gemessene Signal der Betriebsgröße kann mit der Modellsignalform mittels des vergleichenden Vergleichsverfahrens verglichen werden. Das gemessene Signal der Betriebsgröße wird derart ermittelt, dass es im Wesentlichen dieselbe endliche Signallänge wie jene der Modellsignalform aufweist. Der Vergleich der Modellsignalform mit dem gemessenen Signal der Betriebsgröße kann dabei als ein, insbesondere diskretes oder kontinuierliches, Signal einer endlichen Länge ausgegeben werden. Abhängig eines Grads der Übereinstimmung oder einer Abweichung des Vergleichs, kann ein Ergebnis ausgegeben werden, ob der zu erkennende Arbeitsfortschritt vorhanden ist. Wenn das gemessene Signal der Betriebsgröße zumindest zu 40% mit der Modellsignalform übereinstimmt, kann der zu erkennende Arbeitsfortschritt vorliegen. Zudem ist denkbar, dass das vergleichende Verfahren mittels des Vergleichs des gemessenen Signals der Betriebsgröße mit der Modellsignalform einen Grad eines Vergleichs zueinander als Ergebnis des Vergleichs ausgeben kann. Hierbei kann der Vergleich von zumindest 60% zueinander als ein Kriterium für ein Vorliegen des zu erkennenden Arbeitsfortschritts sein. Dabei ist davon auszugehen, dass die untere Grenze für die Übereinstimmung bei 40% und die obere Grenze für die Übereinstimmung bei 90% liegt. Entsprechend liegt die obere Grenze für die Abweichung bei 60% und die untere Grenze für die Abweichung liegt bei 10%.

Bei der Parameterschätzung kann auf einfache Weise ein Vergleich zwischen der zuvor festgelegten Modellsignalform und dem Signal der Betriebsgröße erfolgen. Hierzu können geschätzte Parameter der Modellsignalform identifiziert werden, um die Modellsignalform dem gemessenen Signal der Betriebsgrößen anzugleichen. Mittels eines Vergleichs zwischen den geschätzten Parametern der zuvor festgelegten Modellsignalform und einem Grenzwert, kann ein Ergebnis zum Vorliegen des zu erkennenden Arbeitsfortschritts ermittelt werden. Anschließend kann eine weitere Bewertung des Ergebnisses des Vergleichs erfolgen, ob der vorgegebene Schwellwert erreicht wurde. Diese Bewertung kann entweder eine Gütebestimmung der geschätzten Parameter oder die Übereinstimmung zwischen der festgelegten Modellsignalform und dem erfassten Signal der Betriebsgröße sein.

In einer weiteren Ausführungsform enthält Verfahrensschritt S3 einen Schritt S3a einer Gütebestimmung der Identifizierung der Modellsignalform im Signal der Betriebsgröße, wobei in Verfahrensschritt S4 das Erkennen des Arbeitsfortschrittes zumindest teilweise anhand der Gütebestimmung erfolgt. Als ein Maß der Gütebestimmung kann eine Anpassungsgüte der geschätzten Parameter ermittelt werden.

In Verfahrensschritt S4 kann zumindest teilweise mittels der Gütebestimmung, insbesondere des Maßes der Güte, eine Entscheidung getroffen werden, ob der zu erkennende Arbeitsfortschritt im Signal der Betriebsgröße identifiziert wurde.

Zusätzlich oder alternativ zur Gütebestimmung kann Verfahrensschritt S3a eine Vergleichsbestimmung der Identifizierung der Modellsignalform und dem Signal der Betriebsgröße umfassen. Der Vergleich der geschätzten Parameter der Modellsignalform zum gemessenen Signal der Betriebsgröße kann beispielsweise 70%, insbesondere 60%, ganz insbesondere 50%, betragen. In Verfahrensschritt S4 erfolgt die Entscheidung, ob der zu erkennende Arbeitsfortschritt vorliegt, zumindest teilweise anhand der Vergleichsbestimmung. Die Entscheidung zum Vorliegen des zu erkennenden Arbeitsfortschrittes kann bei dem vorgegebenen Schwellwert von zumindest 40% Übereinstimmung des gemessenen Signals der Betriebsgröße und der Modellsignalform erfolgen.

Bei einer Kreuzkorrelation kann ein Vergleich zwischen der zuvor festgelegten Modellsignalform und dem gemessenen Signal der Betriebsgröße erfolgen. Bei der Kreuzkorrelation kann die zuvor festgelegte Modellsignalform mit dem gemessenen Signal der Betriebsgröße korreliert werden. Bei einer Korrelation der Modellsignalform mit dem gemessenen Signal der Betriebsgröße kann ein Maß der Übereinstimmung der beiden Signale ermittelt werden. Das Maß der Übereinstimmung kann beispielsweise 40%, insbesondere 50%, ganz insbesondere 60%, betragen.

In Verfahrensschritt S4 des erfindungsgemäßen Verfahrens kann das Erkennen des Arbeitsfortschrittes zumindest teilweise anhand der Kreuzkorrelation der Modellsignalform mit dem gemessenen Signal der Betriebsgröße erfolgen. Das Erkennen kann dabei zumindest teilweise anhand des vorgegebenen Schwellwerts von zumindest 40% Übereinstimmung des gemessenen Signals der Betriebsgrö-βe und der Modellsignalform erfolgen.

In einer Ausführungsform ist der Schwellwert der Übereinstimmung durch einen Benutzer der Handwerkzeugmaschine festlegbar und/oder werksseitig vordefiniert.

In einer weiteren Ausführungsform ist die Handwerkzeugmaschine eine Schlagschraubmaschine, insbesondere eine Drehschlagschraubmaschine, und der Arbeitsfortschritt ein Einsetzen oder Aussetzen eines Schlagbetriebs, insbesondere eines Drehschlagbetriebs.

In einer Ausführungsform ist der Schwellwert der Übereinstimmung auf Grundlage einer werksseitig vordefinierten Vorauswahl von Anwendungsfällen der Handwerkzeugmaschine von einem Benutzer auswählbar. Dies kann beispielsweise über eine Benutzerschnittstelle, etwa ein HMI (Human Machine Interface), etwa ein Mobilgerät, insbesondere ein Smartphone und/oder ein Tablet geschehen.

Insbesondere kann in Verfahrensschritt S1 die Modellsignalform variabel, insbesondere von einem Benutzer, festgelegt werden. Hierbei ist die Modellsignalform dem zu erkennenden Arbeitsfortschritt zugeordnet, sodass der Benutzer den zu erkennenden Arbeitsfortschritt vorgeben kann.

Vorteilhafterweise wird die Modellsignalform in Verfahrensschritt S1 vordefiniert, insbesondere werksseitig festgelegt. Grundsätzlich ist denkbar, dass die Modellsignalform geräteintern hinterlegt oder gespeichert ist, alternativ und/oder zusätzlich der Handwerkzeugmaschine bereitgestellt wird, insbesondere von einem externen Datengerät bereitgestellt wird.

Der Fachmann wird erkennen, dass das erfindungsgemäße Verfahren die Erkennung des Arbeitsfortschritts unabhängig von zumindest einer Solldrehzahl des Elektromotors, zumindest einer Anlaufcharakteristik des Elektromotors und/oder zumindest eines Ladezustands einer Energieversorgung, insbesondere eines Akkus, der Handwerkzeugmaschine ermöglicht.

Das Signal der Betriebsgröße soll hier als eine zeitliche Abfolge von Messwerten aufgefasst werden. Alternativ und/oder zusätzlich kann das Signal der Betriebsgröße auch ein Frequenzspektrum sein. Alternativ und/oder zusätzlich kann das Signal der Betriebsgröße auch nachgearbeitet werden, wie beispielsweise geglättet, gefiltert, gefittet und dergleichen.

In einer weiteren Ausführungsform wird das Signal der Betriebsgröße als Folge von Messwerten in einem Speicher, vorzugsweise einem Ringspeicher, insbesondere der Handwerkzeugmaschine, gespeichert.

In einem Verfahrensschritt wird der zu erkennende Arbeitsfortschritt anhand von weniger als zehn Schlägen eines Schlagwerks der Handwerkzeugmaschine, insbesondere weniger als zehn Schlagschwingungsperioden des Elektromotors, bevorzugt weniger als sechs Schläge eines Schlagwerks der Handwerkzeugmaschine, insbesondere weniger als sechs Schlagschwingungsperioden des Elektromotors, ganz bevorzugt weniger als vier Schlägen eines Schlagwerks, insbesondere weniger als vier Schlagschwingungsperioden des Elektromotors, identifiziert. Hierbei soll als ein Schlag des Schlagwerks ein axialer, radialer, tangentialer und/oder in Umfangsrichtung gerichteter Schlag eines Schlagwerksschläger, insbesondere eines Hammers, auf einen Schlagwerkskörper, insbesondere einen Amboss, verstanden werden. Die Schlagschwingungsperiode des Elektromotors ist mit der Betriebsgröße des Elektromotors korreliert. Eine Schlagschwingungsperiode des Elektromotors kann anhand von Betriebsgrößenschwankungen im Signal der Betriebsgröße ermittelt werden.

Einen weiteren Gegenstand der Erfindung bildet eine Handwerkzeugmaschine, aufweisend einen Elektromotor, einen Messwertaufnehmer einer Betriebsgröße des Elektromotors, und eine Steuerungseinheit, wobei vorteilhafterweise die Handwerkzeugmaschine eine Schlagschraubmaschine, insbesondere eine Drehschlagschraubmaschine, ist, und die Handwerkzeugmaschine zur Durchführung des vorstehend beschriebenen Verfahrens eingerichtet ist.

Der Elektromotor der Handwerkzeugmaschine versetzt eine Eingangsspindel in Rotation, und eine Ausgangsspindel ist mit der Werkzeugaufnahme verbunden. Ein Amboss ist drehfest mit der Ausgangsspindel verbunden und ein Hammer ist derart mit der Eingangsspindel verbunden, dass er infolge der Drehbewegung der Eingangsspindel eine intermittierende Bewegung in axialer Richtung der Eingangsspindel sowie eine intermittierende rotatorische Bewegung um die Eingangsspindel ausführt, wobei der Hammer auf diese Weise intermittierend auf den Amboss aufschlägt und so einen Schlag- und einen Drehimpuls an den Amboss und somit an die Ausgangsspindel abgibt. Ein erster Sensor übermittelt ein erstes Signal beispielsweise zur Ermittlung eines Motordrehwinkels an die Steuerungseinheit. Ferner kann ein zweiter Sensor ein zweites Signal zur Ermittlung einer Motorgeschwindigkeit an die Steuerungseinheit übermittelt.

Vorteilhafterweise weist die Handwerkzeugmaschine eine Speichereinheit auf, in der diverse Werte gespeichert werden können.

In einer weiteren Ausführungsform ist die Handwerkzeugmaschine eine akkubetriebene Handwerkzeugmaschine, insbesondere ein akkubetriebener Drehschlagschrauber. Auf diese Weise ist eine flexible und netzunabhängige Benutzung der Handwerkzeugmaschine gewährleistet.

Vorteilhafterweise ist die Handwerkzeugmaschine eine Schlagschraubmaschine, insbesondere eine Drehschlagschraubmaschine, und der zu erkennende Arbeitsfortschritt das Aufliegen eines Schraubenkopfes auf einer Befestigungsunterlage, das freie Drehen einer gelösten Schraube, das Ein- oder Aussetzen eines Drehschlagwerks der Handwerkzeugmaschine, und/oder ein Schlag des Drehschlagwerkes ohne Weiterdrehen des geschlagenen Elementes bzw. der Werkzeugaufnahme.

Die Identifizierung der Schläge des Schlagwerks der Handwerkzeugmaschine, insbesondere die Schlagschwingungsperioden des Elektromotors, kann beispielsweise dadurch erreicht werden, dass ein Fas-Fitting-Algorithmus verwendet wird, mittels dem eine Auswertung der Schlagerkennung innerhalb von weniger als 100ms, insbesondere weniger als 60ms, ganz insbesondere weniger als 40ms, ermöglicht werden kann. Hierbei ermöglicht das genannte erfinderische Verfahren die Erkennung eines Arbeitsfortschrittes im Wesentlichen für sämtliche oben genannte Anwendungsfälle und einer Verschraubung für lose als auch feste Befestigungselemente in den Befestigungsträger.

Durch die vorliegende Erfindung ist ein weitestgehender Verzicht auf aufwändigere Methoden der Signalverarbeitung wie z.B. Filter, Signalrückschleifen, Systemmodelle (statische sowie adaptive) und Signalnachführungen möglich.

Darüber hinaus erlauben diese Methoden eine noch schnellere Identifikation des Schlagbetriebs bzw. des Arbeitsfortschritts, womit eine noch schnellere Reaktion des Werkzeugs hervorgerufen werden kann. Dies gilt insbesondere für die Anzahl der vergangenen Schläge nach Einsetzen des Schlagwerks bis zur Identifikation und auch in besonderen Betriebssituationen wie z.B. der Anlaufphase des Antriebsmotors. Dabei müssen auch keine Einschränkungen der Funktionalität des Werkzeugs wie beispielsweise eine Herabsetzung der maximalen Antriebsdrehzahl getroffen werden. Des Weiteren ist das Funktionieren des Algorithmus auch unabhängig von weiteren Einflussgrößen wie bspw. Solldrehzahl und Akkuladezustand.

Es ist grundsätzlich keine zusätzliche Sensorik (z.B. Beschleunigungssensor) notwendig, dennoch können diese Auswertemethoden auch auf Signale weiterer Sensorik angewendet werden. Des Weiteren kann in anderen Motorkonzepten, welche beispielsweise ohne Drehzahlerfassung auskommen, diese Methode auch bei anderen Signalen zur Anwendung kommen.

In einer bevorzugten Ausführungsform ist die Handwerkzeugmaschine ein Akku-Schrauber, eine Bohrmaschine, eine Schlagbohrmaschine oder ein Bohrhammer, wobei als Werkzeug ein Bohrer, eine Bohrkrone oder verschiedene Bitaufsätze verwendet werden können. Die erfindungsgemäße Handwerkzeugmaschine ist insbesondere als Schlagschraubwerkzeug ausgebildet, wobei durch die impulshafte Freisetzung der Motorenergie ein höheres Spitzendrehmoment für ein Einschrauben oder ein Herausschrauben einer Schraube oder einer Schraubenmutter erzeugt wird. Unter Übertragung elektrischer Energie soll in diesem Zusammenhang insbesondere verstanden werden, dass die Handwerkzeugmaschine über einen Akku und/oder über eine Stromkabelanbindung an den Korpus Energie weiterleitet.

Zudem kann abhängig von der gewählten Ausführungsform das Schraubwerkzeug in der Drehrichtung flexibel ausgebildet sein. Auf diese Weise kann das vorgeschlagene Verfahren sowohl zum Eindrehen als auch zum Herausdrehen einer Schraube beziehungsweise einer Schraubenmutter verwendet werden.

Im Rahmen der vorliegenden Erfindung soll "ermitteln" insbesondere messen oder aufnehmen einschließen, wobei "aufnehmen" im Sinne von messen und speichern aufgefasst werden soll, zudem soll "ermitteln" auch eine mögliche Signalverarbeitung eines gemessenen Signals einschließen.

Weiter soll "entscheiden" auch als erkennen oder detektieren verstanden werden, wobei eine eindeutige Zuordnung erreicht werden soll. Als "identifizieren" soll ein Erkennen einer teilweisen Übereinstimmung mit einem Muster verstanden werden, die beispielsweise durch ein Anfitten eines Signals an das Muster, eine Fourier-Analyse oder dergleichen ermöglicht werden kann. Die "teilweise Übereinstimmung" soll derart verstanden werden, dass das Anfitten einen Fehler aufweist, der geringer als eine vorgegebene Schwelle ist, insbesondere geringer als 30%, ganz insbesondere geringer als 20%.

Weitere Merkmale, Anwendungsmöglichkeiten und Vorteile der Erfindung ergeben sich aus der nachfolgenden Beschreibung des Ausführungsbeispiels der Erfindung, welches in der Zeichnung dargestellt ist. Dabei ist zu beachten, dass die in den Figuren beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung nur einen beschreibenden Charakter hat und nicht dazu gedacht ist, die Erfindung in irgendeiner Form einzuschränken.

### Zeichnungen

Die Erfindung wird im Folgenden anhand von bevorzugten Ausführungsbeispielen näher erläutert. Die Zeichnungen sind schematisch und zeigen:
- Fig. 1: eine schematische Darstellung einer elektrischen Handwerkzeugmaschine;
- Fig. 2(a): einen Arbeitsfortschritt einer Beispielanwendung sowie ein zugeordnetes Signal einer Betriebsgröße;
- Fig. 2(b): eine Übereinstimmung des in Figur 2(a) gezeigten Signals der Betriebsgröße mit einem Modellsignal;
- Fig. 3: einen Arbeitsfortschritt einer Beispielanwendung sowie zwei zugeordnete Signale von Betriebsgrößen;
- Fig. 4: Verläufe von Signalen einer Betriebsgröße gemäß zweier Ausführungsformen der Erfindung;
- Fig. 5: Verläufe von Signale einer Betriebsgröße gemäß zweier Ausführungsformen der Erfindung;
- Fig. 6: einen Arbeitsfortschritt einer Beispielanwendung sowie zwei zugeordnete Signale von Betriebsgrößen;
- Fig. 7: Verläufe von Signalen zweier Betriebsgröße gemäß zweier Ausführungsformen der Erfindung;
- Fig. 8: Verläufe von Signalen zweier Betriebsgröße gemäß zweier Ausführungsformen der Erfindung;
- Fig. 9: eine schematische Darstellung zweier verschiedener Aufzeichnungen des Signals der Betriebsgröße;
- Fig. 10(a): ein Signal einer Betriebsgröße;
- Fig. 10(b): eine Amplitudenfunktion einer ersten, in dem Signal der Fig. 10 (a) enthaltenen Frequenz.
- Fig. 10(c): eine Amplitudenfunktion einer zweiten, in dem Signal der Fig. 10(a) enthaltenen Frequenz.
- Fig. 11: eine gemeinsame Darstellung eines Signals einer Betriebsgröße und eines Ausgabesignals einer Bandpassfilterung, basierend auf einem Modellsignal;
- Fig. 12: eine gemeinsame Darstellung eines Signals einer Betriebsgröße und einer Ausgabe einer Frequenzanalyse, basierend auf einem Modellsignal;
- Fig. 13: eine gemeinsame Darstellung eines Signals einer Betriebsgröße und eines Modellsignals für die Parameterschätzung; und
- Fig. 14: eine gemeinsame Darstellung eines Signals einer Betriebsgröße und eines Modellsignals für die Kreuzkorrelation.

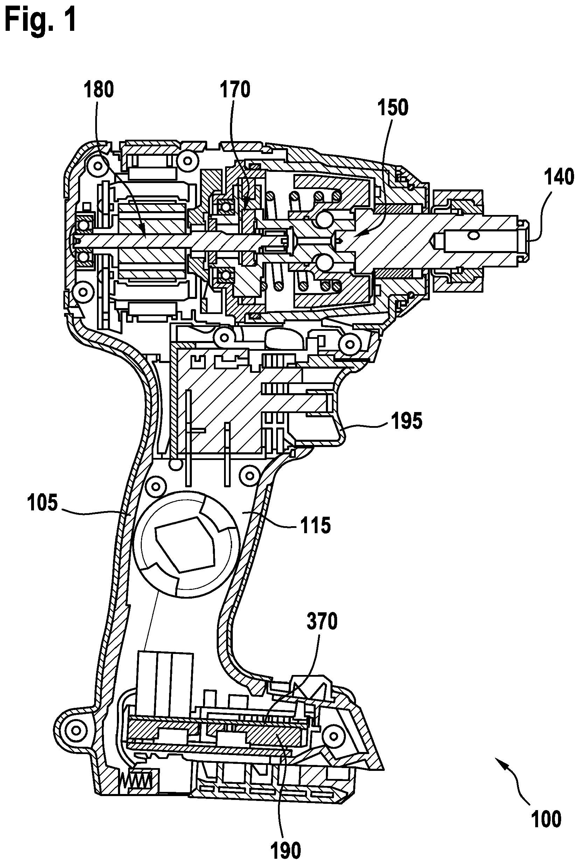

Die Figur 1 zeigt eine erfindungsgemäße Handwerkzeugmaschine 100, die ein Gehäuse 105 mit einem Handgriff 115 aufweist. Gemäß der dargestellten Ausführungsform ist die Handwerkzeugmaschine 100 zur netzunabhängigen Stromversorgung mechanisch und elektrisch mit einem Akkupack 190 verbindbar. In Fig. 1 ist die Handwerkzeugmaschine 100 beispielhaft als Akkudrehschlagschrauber ausgebildet. Es wird jedoch darauf hingewiesen, dass die vorliegende Erfindung nicht auf Akku-Drehschlagschrauber beschränkt ist, sondern prinzipiell bei Handwerkzeugmaschinen 100 bei denen die Erkennung eines Arbeitsfortschrittes notwendig ist, wie etwa Schlagbohrmaschinen, seine Anwendung finden kann.

In dem Gehäuse 105 sind ein von dem Akkupack 190 mit Strom versorgter, elektrischer Elektromotor 180 und ein Getriebe 170 angeordnet. Der Elektromotor 180 ist über das Getriebe 170 mit einer Eingangsspindel verbunden. Ferner ist innerhalb des Gehäuses 105 im Bereich des Akkupacks 190 eine Steuerungseinheit 370 angeordnet, welche zur Steuerung und/oder Regelung des Elektromotors 180 und des Getriebes 170 beispielsweise mittels einer eingestellten Motordrehzahl n, einem angewählten Drehimpuls, einem gewünschten Getriebegang x oder dergleichen auf diese einwirkt.

Der Elektromotor 180 ist beispielsweise über einen Handschalter 195 betätigbar, d. h. ein- und ausschaltbar, und kann ein beliebiger Motortyp, beispielsweise ein elektronisch kommutierter Motor oder ein Gleichstrommotor, sein. Grundsätzlich ist der Elektromotor 180 derart elektronisch steuer- bzw. regelbar, dass sowohl ein Reversierbetrieb, als auch Vorgaben hinsichtlich der gewünschten Motordrehzahl n und des gewünschten Drehimpulses realisierbar sind. Die Funktionsweise und der Aufbau eines geeigneten Elektromotors sind aus dem Stand der Technik hinreichend bekannt, sodass hier zwecks Knappheit der Beschreibung auf eine eingehende Beschreibung verzichtet wird.

Über eine Eingangsspindel und eine Ausgangsspindel ist eine Werkzeugaufnahme 140 drehbar im Gehäuse 105 gelagert. Die Werkzeugaufnahme 140 dient zur Aufnahme eines Werkzeugs und kann unmittelbar an die Ausgangsspindel angeformt sein oder aufsatzförmig mit dieser verbunden sein.

Die Steuerungseinheit 370 steht mit einer Stromquelle in Verbindung und ist derart ausgebildet, dass sie den Elektromotor 180 mittels verschiedener Stromsignale elektronisch steuer- bzw. regelbar ansteuern kann. Die verschiedenen Stromsignale sorgen für unterschiedliche Drehimpulse des Elektromotors 180, wobei die Stromsignale über eine Steuerleitung an den Elektromotor 180 geleitet werden. Die Stromquelle kann beispielsweise als Batterie oder, wie in dem dargestellten Ausführungsbeispiel als Akkupack 190 oder als Netzanschluss ausgebildet sein.

Ferner können nicht im Detail dargestellte Bedienelemente vorgesehen sein, um verschiedene Betriebsmodi und/oder die Drehrichtung des Elektromotors 180 einzustellen.

Gemäß einem Aspekt der Erfindung wird ein Verfahren zum Betrieb einer Handwerkzeugmaschine 100 bereitgestellt, mittels dessen ein Arbeitsfortschritt beispielsweise der in Figur 1 dargestellten Handwerkzeugmaschine 100 bei einer Anwendung, beispielsweise einem Ein- oder Ausschraubvorgang, festgestellt werden kann, wobei das Bereitstellen der Vergleichsinformationen zumindest teilweise auf der Basis eines Einlernvorgangs erfolgt. Unter "Bereitstellen" wird in diesem Zusammenhang das Verfügbar machen des entsprechenden Merkmals in einen internen oder externen Speicher der Handwerkzeugmaschine 100 verstanden. Einzelne Aspekte des Einlernvorgangs werden weiter unten ausführlicher dargestellt.

Als Folge der Feststellung des Arbeitsfortschritts werden in Ausführungsformen der Erfindung maschinenseitig entsprechende Reaktionen oder Routinen ausgelöst. Hierdurch können zuverlässig reproduzierbare Ein- und Ausschraubvorgänge hoher Qualität erzielt werden. Aspekte des Verfahrens beruhen unter anderem auf einer Untersuchung von Signalformen und einer Bestimmung eines Grades der Übereinstimmung dieser Signalformen, die beispielsweise einer Bewertung eines Weiterdrehens eines durch die Handwerkzeugmaschine 100 getriebenen Elements, etwa einer Schraube, entsprechen kann.

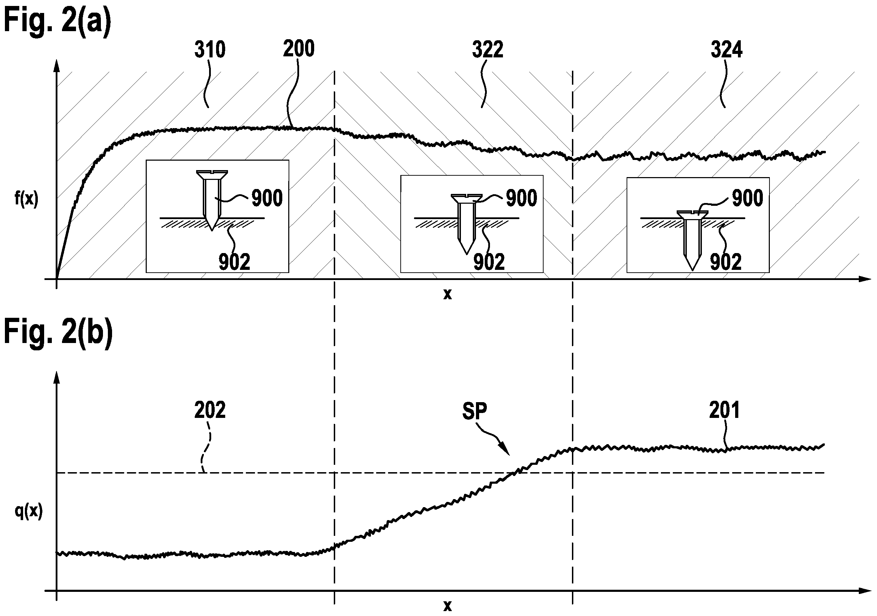

In Figur 2 ist diesbezüglich ein beispielhaftes Signal einer Betriebsgröße 200 eines Elektromotors 180 eines Drehschlagschraubers, wie es so oder in ähnlicher Form bei der bestimmungsgemäßen Verwendung eines Drehschlagschraubers auftritt, dargestellt. Während sich die folgenden Ausführungen auf einen Drehschlagschrauber beziehen, gelten sie im Rahmen der Erfindung sinngemäß auch für andere Handwerkzeugmaschinen 100 wie beispielsweise Schlagbohrmaschinen.

Auf der Abszisse x ist im vorliegenden Beispiel der Figur 2 die Zeit als Bezugsgröße aufgetragen. In einer alternativen Ausführungsform wird jedoch eine mit der Zeit korrelierten Größe als Bezugsgröße aufgetragen, wie beispielsweise der Drehwinkel der Werkzeugaufnahme 140, der Drehwinkel des Elektromotors180, eine Beschleunigung, ein Ruck, insbesondere höherer Ordnung, eine Leistung, oder eine Energie. Auf der Ordinate f(x) ist in der Figur die zu jedem Zeitpunkt anliegende Motordrehzahl n aufgetragen. Anstelle der Motordrehzahl kann auch eine andere, mit der Motordrehzahl korrelierende Betriebsgröße gewählt werden. In alternativen Ausführungsformen der Erfindung repräsentiert f(x) beispielsweise ein Signal des Motorstroms.

Motordrehzahl und Motorstrom sind Betriebsgrößen, die bei Handwerkzeugmaschinen 100 üblicherweise und ohne Zusatzaufwand von einer Steuerungseinheit 370 erfasst werden. Das Ermitteln des Signals einer Betriebsgröße 200 des Elektromotors 180 wird im Rahmen der vorliegenden Offenbarung als Verfahrensschritt S2 bezeichnet. In bevorzugten Ausführungsformen der Erfindung kann ein Benutzer der Handwerkzeugmaschine 100 auswählen, basierend auf welcher Betriebsgröße das erfinderische Verfahren ausgeführt werden soll.

In Fig. 2(a) ist ein Anwendungsfall eines losen Befestigungselements, beispielsweise einer Schraube 900, in einen Befestigungsträger 902, beispielsweise ein Holzbrett, gezeigt. Man erkennt in Figur 2(a), dass das Signal einen ersten Bereich 310 umfasst, der durch ein monotones Anwachsen der Motordrehzahl gekennzeichnet ist, sowie durch einen Bereich vergleichsweise konstanter Motordrehzahl, den man auch als Plateau bezeichnen kann. Der Schnittpunkt zwischen Abszisse x und Ordinate f(x) in Figur 2(a) entspricht beim Schraubvorgang dem Start des Drehschlagschraubers.

In dem ersten Bereich 310 trifft die Schraube 900 auf einen relativ geringen Widerstand in dem Befestigungsträger 902, und das zum Einschrauben erforderliche Drehmoment liegt unterhalb des Ausrückmoments des Drehschlagwerks.

Der Verlauf der Motordrehzahl im ersten Bereich 310 entspricht also dem Betriebszustand des Schraubens ohne Schlag.

Wie Figur 2(a) entnommen werden kann, liegt der Kopf der Schraube 900 im Bereich 322 nicht auf dem Befestigungsträger 902 auf, was bedeutet, dass die durch den Drehschlagschrauber getriebene Schraube 900 mit jedem Schlag weitergedreht wird. Dieser zusätzliche Drehwinkel kann bei fortschreitendem Arbeitsvorgang geringer werden, was in der Figur durch eine kleiner werdende Periodendauer reflektiert ist. Außerdem kann sich ein weiteres Einschrauben auch durch eine im Mittel abnehmende Drehzahl zeigen.

Erreicht anschließend der Kopf der Schraube 900 die Unterlage 902, ist zum weiteren Einschrauben ein noch höheres Drehmoment und damit mehr Schlagenergie nötig. Da die Handwerkzeugmaschine 100 jedoch nicht mehr Schlagenergie liefert, dreht sich die Schraube 900 nicht mehr beziehungsweise nur noch um einen signifikant kleineren Drehwinkel weiter.

Der in dem zweiten 322 und dritten Bereich 324 ausgeführte Drehschlagbetrieb ist durch einen oszillierenden Verlauf des Signals der Betriebsgröße 200 gekennzeichnet, wobei die Form der Oszillation beispielsweise trigonometrisch oder anderweitig oszillierend sein kann. Im vorliegenden Fall hat die Oszillation einen Verlauf, den man als modifizierte trigonometrische Funktion bezeichnen kann. Diese charakteristische Form des Signals der Betriebsgröße 200 im Schlagschraubbetrieb entsteht durch das Aufziehen und Freilaufen des Schlagwerksschlägers und der zwischen Schlagwerk und Elektromotor 180 befindlichen Systemkette u.a. des Getriebes 170.

Die einzelnen Arbeitsfortschritten beispielsweise dem Schlagbetrieb, zugeordneten Signalformen sind also prinzipiell durch bestimmte charakteristische Merkmale gekennzeichnet, die zumindest teilweise durch die inhärenten Eigenschaften des Drehschlagschraubers vorgegeben sind. In dem erfindungsgemäßen Verfahren werden ausgehend von dieser Erkenntnis in einem Schritt S1 Vergleichsinformationen bereitgestellt, wobei in einem Schritt S1a zumindest eine Modellsignalform 240 bereitgestellt wird. Die Modellsignalform 240 ist hierbei einem Arbeitsfortschritt, beispielsweise dem Erreichen des Aufliegens des Kopfes der Schraube 900 auf dem Befestigungsträger 902, zuordenbar, und im Zusammenhang mit einigen Ausführungsformen der Erfindung wird die Modellsignalform 240 auch als zustandstypische Modellsignalform bezeichnet. Mit anderen Worten enthält die Modellsignalform 240 für den Arbeitsfortschritt typische Merkmale wie Vorhandensein eines Schwingungsverlaufs, Schwingungsfrequenzen beziehungsweise -amplituden, oder einzelne Signalsequenzen in kontinuierlicher, quasi-kontinuierlicher oder diskreter Form.

In anderen Anwendungen kann der zu detektierende Arbeitsfortschritt durch andere Signalformen als durch Schwingungen gekennzeichnet sein, etwa durch Unstetigkeiten oder Wachstumsraten in der Funktion f(x). In solchen Fällen ist die zustandstypische Modellsignalform durch eben diese Parameter gekennzeichnet anstelle durch Schwingungen.

An dieser Stelle sei bereits angemerkt, dass in einem Verfahrensschritt S1b eine weitere Vergleichsinformation bereitgestellt wird, nämlich ein Schwellwert der Übereinstimmung, der weiter unten ausführlicher beschrieben wird.

In einer bevorzugten Ausgestaltung des erfinderischen Verfahrens kann in Verfahrensschritt S1 die zustandstypische Modellsignalform 240 durch einen Benutzer festgelegt werden. Die zustandstypische Modellsignalform 240 kann ebenfalls geräteintern hinterlegt oder gespeichert sein. In einer alternativen Ausführungsform kann die zustandstypische Modellsignalform alternativ und/oder zusätzlich der Handwerkzeugmaschine 100 bereitgestellt werden, beispielsweise von einem externen Datengerät.

In einem Verfahrensschritt S3 des erfindungsgemäßen Verfahrens wird das Signal der Betriebsgröße 200 des Elektromotors 180 mit der zustandstypischen Modellsignalform 240 verglichen. Das Merkmal "vergleichen" soll im Kontext mit der vorliegenden Erfindung breit und im Sinne einer Signalanalyse ausgelegt werden, sodass ein Ergebnis des Vergleichs insbesondere auch eine teilweise oder graduelle Übereinstimmung des Signals der Betriebsgröße 200 des Elektromotors 180 mit der Modellsignalform 240 sein kann, wobei der Grad der Übereinstimmung der beiden Signale durch verschiedene mathematische Verfahren ermittelt werden kann, die an späterer Stelle noch genannt werden.

In Schritt S3 wird aus dem Vergleich überdies eine Übereinstimmungsbewertung des Signals der Betriebsgröße 200 des Elektromotors 180 mit der zustandstypischen Modellsignalform 240 ermittelt und somit eine Aussage über die Übereinstimmung der beiden Signale getroffen.

Figur 2(b) zeigt einen Verlauf einer Funktion q(x) einer zu dem Signal der Betriebsgröße 200 der Figur 2(a) korrespondierenden Übereinstimmungsbewertung 201, die an jeder Stelle der Abszisse x einen Wert der Übereinstimmung zwischen dem Signal der Betriebsgröße 200 des Elektromotors 180 und der zustandstypischen Modellsignalform 240 angibt.

Im vorliegenden Beispiel des Eindrehens der Schraube 900 wird diese Bewertung herangezogen, um das Maß des Weiterdrehens bei einem Schlag zu bestimmen. Die in Schritt S1a bereitgestellte Modellsignalform 240 entspricht im Beispiel einem idealen Schlag ohne Weiterdrehen, das heißt dem Zustand, bei dem der Kopf der Schraube 900 auf der Oberfläche des Befestigungsträgers 902 aufliegt, wie in Bereich 324 der Figur 2(a) gezeigt. Dementsprechend ergibt sich im Bereich 324 eine hohe Übereinstimmung der beiden Signale, was durch einen gleichbleibend hohen Wert der Funktion q(x) der Übereinstimmungsbewertung 201 reflektiert wird. Im Bereich 310 dagegen, in dem jeder Schlag mit hohen Drehwinkeln der Schraube 900 einhergeht, werden nur kleine Übereinstimmungswerte erreicht. Je weniger sich die Schraube 900 beim Schlag weiterdreht, desto höher ist diese Übereinstimmung, was daran erkennbar ist, dass die Funktion q(x) der Übereinstimmungsbewertung 201 bereits bei Einsetzen des Schlagwerks im Bereich 322, der durch einen je Schlag fortlaufend kleiner werdenden Drehwinkel der Schraube 200 aufgrund des steigenden Einschraubwiderstands gekennzeichnet ist, kontinuierlich anwachsende Übereinstimmungswerte wiedergibt.

Wie im Beispiel der Figur 2 erkennbar ist, ist die Übereinstimmungsbewertung 201 der Signale zur Schlagunterscheidung aufgrund ihrer mehr oder weniger sprunghaften Ausprägung hierfür gut geeignet, wobei diese sprunghafte Änderung durch die ebenfalls mehr oder weniger sprunghafte Änderung des Weiterdrehwinkels der Schraube 900 beim Abschließen des exemplarischen Arbeitsvorgangs bedingt ist. Das Erkennen des Arbeitsfortschritts wird erfindungsgemäß zumindest teilweise anhand eines Vergleichs der Übereinstimmungsbewertung 201 mit dem in Schritt S1a bereitgestellten Schwellwert der Übereinstimmung erfolgen, welcher in Figur 2(b) durch eine gestrichelte Linie 202 gekennzeichnet ist. Im vorliegenden Beispiel der Figur 2(b) ist der Schnittpunkt SP der Funktion q(x) der Übereinstimmungsbewertung 201 mit der Linie 202 dem Arbeitsfortschritt des Aufliegens des Kopfes der Schraube 900 auf der Oberfläche des Befestigungsträgers 902 zugeordnet.

In einem Verfahrensschritt S4 des erfindungsgemäßen Verfahrens wird der Arbeitsfortschritt nun zumindest teilweise anhand der in Verfahrensschritt S3 ermittelten Übereinstimmungsbewertung 201 erkannt.

Es ist dabei anzumerken, dass sich die Funktion nicht nur auf Einschraubfälle beschränkt, sondern auch einen Einsatz bei Ausschraubanwendungen beinhaltet.

Wie weiter oben bereits ausgeführt, erfolgt das Bereitstellen der Vergleichsinformationen in Schritt S1 erfindungsgemäß zumindest teilweise auf der Basis eines Einlernvorgangs. Der Einlernvorgang beinhaltet in Ausführungsformen der Erfindung das Ausführen oder Einlesen zumindest einer Beispielanwendung der Handwerkzeugmaschine 100, wobei die zumindest eine Beispielanwendung ein Erreichen eines festgelegten Arbeitsfortschrittes der Handwerkzeugmaschine 100 umfasst, beispielsweise ein Erreichen des Zustands, bei dem der Kopf der Schraube 900 auf der Oberfläche des Befestigungsträgers 902 aufliegt, wie in Bereich 324 der Figur 2(a) gezeigt.

In einigen Ausführungsformen wird durch den Einlernvorgang das Modellsignal 240 bereitgestellt, wobei der Einlernvorgang die folgenden Verfahrensschritte umfasst
- A1: Ermitteln eines Signals einer Betriebsgröße 200` des Elektromotors 180 anhand der Beispielanwendung;
- A2: Bestimmen einer der Beispielanwendung zugeordneten Modellsignalform 240` anhand des Signals der Betriebsgröße 200` während des Erreichens, insbesondere zum Zeitpunkt des Erreichens des festgelegten Arbeitsfortschrittes;
- A2`: Bestimmen einer der Beispielanwendung zugeordneten Modellsignalform 240` anhand des Signals der Betriebsgröße 200`, wie es zu dem Zeitpunkt des Erreichens des festgelegten Arbeitsfortschrittes vorliegt.

Vorteilhafterweise kann der Einlernvorgang das Ausführen oder Einlesen von zumindest zwei Beispielanwendungen beinhalten, sowie das Ermitteln der Modellsignalform 240 aus den zwei oder mehr den Beispielanwendungen zugeordneten Modellsignalformen 240`, beispielsweise durch Mittelwertbildung oder eine andere statistische Operation. Die so ermittelte Modellsignalform 240 wird, beispielsweise geräteintern, abgespeichert und in folgenden Anwendungen im oben beschriebenen Schritt S1a im Rahmen des erfindungsgemäßen Verfahrens bereitgestellt.

Die Grundlage dieser Ausführungsform ist also ein Einlernen durch Anwendungen. Vereinfacht gesagt, macht der Anwender eine oder mehrere beispielhafte Anwendungen, und dabei merkt sich die Handwerkzeugmaschine 100 die Modellsignalform 240`, bei welcher der Anwender die Handwerkzeugmaschine 100 stoppt oder die Drehzahl reduziert. Bei nachfolgenden Anwendungen stoppt oder reduziert die Handwerkzeugmaschine 100 automatisch die Drehzahl, wenn der Schwellwert der Übereinstimmung, der werksseitig oder benutzerseitig vorgegeben oder seinerseits ebenfalls eingelernt ist, bei der Übereinstimmungsbewertung des Schrittes S3 erreicht wird. Dabei könnte der Drehzahlverlauf im Sinne der bei Erreichen des zu erkennenden Arbeitsfortschrittes auszuführenden Routine auch mit Hilfe der Beispielanwendungen eingelernt werden.

Durch das Verändern des Modelsignals 240 wird bei gleichbleibender Verschraubung eine hohe Übereinstimmung zwischen gemessenem Signal der Betriebsgröße 200 und dem Modellsignal 240 erkannt und die Handwerkzeugmaschine 100 kann bei Erreichen des festeingestellten Schwellwerts der Übereinstimmung eine festgelegte oder vom Benutzer auszuwählende Routine ausführen, was an späterer Stelle noch genauer beschrieben wird.

In einer weiteren Ausführungsform wird nicht das Modellsignal 240, sondern der Schwellwert der Übereinstimmung zumindest teilweise auf Basis des Einlernvorgangs bereitgestellt, wobei der Einlernvorgang die folgenden Verfahrensschritte umfasst
- B1: Bereitstellen zumindest einer Modellsignalform 240", wobei die Modellsignalform 240" einem Arbeitsfortschritt der Handwerkzeugmaschine 100 zuordenbar ist;
- B2: Ermitteln eines Signals einer Betriebsgröße 200` des Elektromotors 180;
- B3: Vergleichen des Signals der Betriebsgröße 200` mit der Modellsignalform 240" zu einem Zeitpunkt eines Reduzierens einer Drehzahl des Elektromotors 180, insbesondere zu einem Zeitpunkt eines Stoppens der Handwerkzeugmaschine 100 durch den Benutzer, und Ermitteln eines der Beispielanwendung zugeordneten Schwellwertes der Übereinstimmung.

Bevorzugterweise wird in Schritt B1 die zumindest eine Modellsignalform nach einem der weiter oben geschilderten Verfahren bereitgestellt, also wiederum durch einen Einlernvorgang.

Vorteilhafterweise beinhaltet der Einlernvorgang in den Ausführungsformen, in welchen der Schwellwert der Übereinstimmung auf Basis eines Einlernvorgangs bereitgestellt wird, das Ausführen oder Einlesen von zumindest zwei Beispielanwendungen, und der Einlernvorgang umfasst das Ermitteln eines Mittelwertes des Schwellwertes der Übereinstimmung aus den zwei oder mehr den Beispielanwendungen zugeordneten Schwellwerten der Übereinstimmung, wobei der Begriff "Mittelwert" an dieser Stelle vereinfacht für eine geeignete statistische Verarbeitung der zumindest zwei Beispielanwendungen steht.

Vereinfacht ausgedrückt führt der Anwender in dieser Ausführungsform eine oder mehrere beispielhafte Anwendungen durch, und dabei merkt sich die Handwerkzeugmaschine 100 den Schwellwert, bei dem der Anwender die Handwerkzeugmaschine 100 stoppt oder die Drehzahl reduziert. Bei nachfolgenden Anwendungen stoppt oder reduziert die Handwerkzeugmaschine 100 automatisch die Drehzahl bei dem gespeicherten bzw. errechneten Mittelwert. Dabei könnte der Drehzahlverlauf auch mit Hilfe der Beispielanwendungen eingelernt werden.

In den beiden vorstehend beschriebenen Ausführungsformen, bei denen entweder die Modellsignalform 240 oder der Schwellwert der Übereinstimmung aus Beispielanwendungen ermittelt werden, kann es in praktischer Hinsicht vorgesehen sein, dass der Einlernvorgang durch Auswahl eines Einlernmodus der Handwerkmaschine 100 initialisiert wird.

In einer weiteren Ausführungsform umfasst das Einlesen der zumindest einen Beispielanwendung das Einlesen eines beispielhaften Signals einer Betriebsgrö-βe des Elektromotors 180 durch die Handwerkzeugmaschine 100. Wie oben bereits erwähnt, kann sowohl der Schwellwert der Übereinstimmung als auch das Modellsignal, oder beides, durch einen Einlernvorgang im Sinne eines Einlesens eines oder mehrerer Schraubprofile bereitgestellt werden. Hierbei kann unter dem Einlesen eines Schraubprofils insbesondere das Einlesen eines beispielhaften Signals einer Betriebsgröße des Elektromotors durch die Handwerkzeugmaschine gemeint sein. Die Schraubprofile können zum Beispiel mit Hilfe einer Verbindung zum Internet eingelesen werden und/oder der Benutzer kann selbige durch das Durchführen von Beispielanwendungen selbst erstellen.

Erfindungsgemäß kann also durch Unterscheidung bzw. Vergleich von Signalformen eine Bewertung eines Arbeitsfortschritts eines durch einen Drehschlagschrauber getriebenen Elements sowie eine Initiierung einer auf den Arbeitsfortschritt folgenden Routine vorgenommen werden, wobei entweder bestimmte hierbei verwendete Signalformen, nämlich die Modellsignalform 240, oder ein Teil des Bewertungskriteriums für die Übereinstimmung der verglichenen Signalformen, nämlich der Schwellwert der Übereinstimmung, oder beide, zumindest teilweise durch einen Einlernvorgang zur Verfügung gestellt werden.

Vorteilhafterweise wird das Feststellen des im Sinne der obigen Ausführungen eingelernten Arbeitsfortschrittes durch einen weiteren Verfahrensschritt S5 ergänzt, in welchem eine erste Routine der Handwerkzeugmaschine 100 zumindest teilweise auf Basis des in Verfahrensschritt S4 erkannten Arbeitsfortschrittes ausgeführt wird, wie im folgenden dargelegt wird. Es wird dabei jeweils angenommen, dass der zu erkennende Arbeitsfortschritt, als Folge dessen die Handwerkzeugmaschine die zuvor genannte erste Routine in Verfahrensschritt S5 ausführt, durch einen Einlernvorgang wie oben beschrieben durch die Parameter Modellsignalform 240 und/oder Schwellwert der Übereinstimmung definiert wurde.

Trotz der sich ergebenden Reduzierung der Drehzahl beim Wechseln des Betriebszustandes auf Schlagbetrieb, ist es zum Beispiel bei kleinen Holzschrauben oder selbstschneidenden Schrauben nur sehr schwer möglich, den Schraubenkopf am Eindringen in das Material zu hindern. Dies liegt daran, dass es durch die Schläge des Schlagwerkes zu einer hohen Spindeldrehzahl, auch bei ansteigendem Moment, kommt.

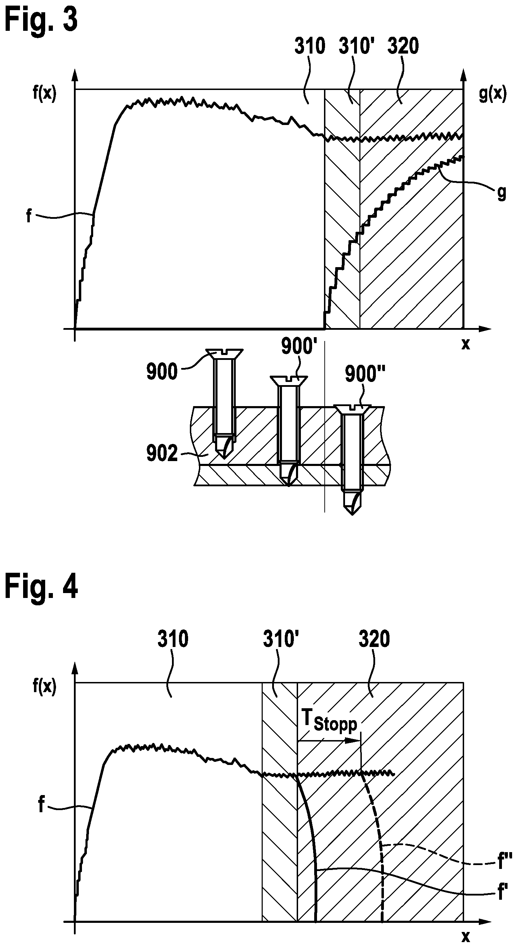

Dieses Verhalten ist in Figur 3 dargestellt. Wie in Figur 2 ist auf der Abszisse x beispielsweise die Zeit aufgetragen, während auf der Ordinate f(x) eine Motordrehzahl und auf der Ordinate g(x) das Drehmoment g(x) aufgetragen ist. Die Graphen f und g geben demnach die Verläufe der Motordrehzahl f und des Drehmoments g über der Zeit an. Im Unteren Bereich der Figur 3 sind, wieder ähnlich zur Darstellung der Figur 2, schematisch verschiedene Zustände bei einem Einschraubvorgang einer Holzschraube 900, 900`, und 900" in einen Befestigungsträger 902 dargestellt.

Im Betriebszustand "Kein Schlag", der in der Figur durch die Bezugsziffer 310 dargestellt ist, dreht die Schraube mit hoher Drehzahl f und geringem Moment g. Im Betriebszustand "Schlag", gekennzeichnet durch die Bezugsziffer 320, steigt das Drehmoment g schnell an, während die Drehzahl f nur geringfügig sinkt, wie weiter oben bereits bemerkt. Der Bereich 310` in Figur 3 kennzeichnet den Bereich, innerhalb dessen die im Zusammenhang mit Figur 2 erläuterte Schlagerkennung stattfindet.

Um beispielsweise einen Schraubenkopf der Schraube 900 am Eindringen in den Befestigungsträger 902 zu hindern, wird erfindungsgemäß in dem Verfahrensschritt S5 eine anwendungsbezogene, passende Routine oder Reaktion des Werkzeugs zumindest teilweise auf Basis des in Verfahrensschritt S4 erkannten Arbeitsfortschritts ausgeführt, etwa ein Abschalten der Maschine, eine Änderung der Drehzahl des Elektromotors 180, und/oder eine optische, akustische, und/oder haptische Rückmeldung an den Benutzer der Handwerkzeugmaschine 100.

In einer Ausführungsform der Erfindung umfasst die erste Routine das Stoppen des Elektromotors 180 unter Berücksichtigung zumindest eines definierten und/oder vorgebbaren, insbesondere durch einen Benutzer der Handwerkzeugmaschine vorggebbaren, Parameters.

Beispielhaft hierfür ist in Figur 4 schematisch ein Stoppen des Gerätes sofort nach der Schlagerkennung 310` gezeigt, wodurch der Anwender darin unterstützt wird, ein Eindringen des Schraubenkopfes in den Befestigungsträger 902 zu vermeiden. In der Figur ist dies durch den nach dem Bereich 310` rasch abfallenden Zweig f` des Graphen f dargestellt.

Ein Beispiel für einen definierten und/oder vorgebbaren, insbesondere durch einen Benutzer der Handwerkzeugmaschine 100 vorggebbaren Parameter eine durch den Anwender definierte Zeit, nach der das Gerät stoppt, was in der Figur 4 durch den Zeitraum T_{Stopp} dargestellt ist sowie den zugehörigen Zweig f" des Graphen f. Im Idealfall hält die Handwerkzeugmaschine 100 gerade so an, dass der Schraubenkopf bündig zur Schraubenauflagefläche ist. Da die Zeit bis dieser Fall eintritt jedoch von Anwendungsfall zu Anwendungsfall unterschiedlich ist, ist es von Vorteil, wenn der Zeitraum T_{Stopp} durch den Anwender definierbar ist.

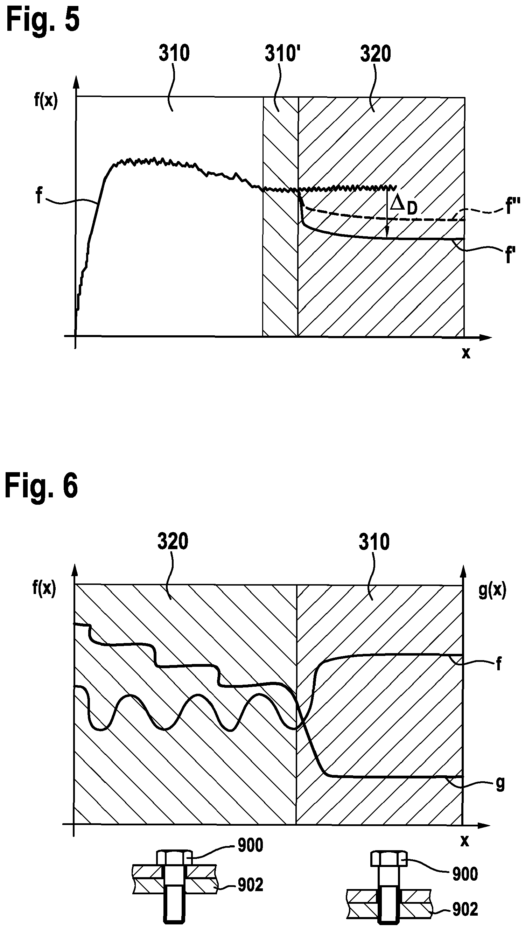

Alternativ hierzu oder zusätzlich ist in einer Ausführungsform der Erfindung vorgesehen, dass die erste Routine eine Änderung, insbesondere eine Reduzierung und/oder eine Erhöhung, einer Drehzahl, insbesondere einer Solldrehzahl, des Elektromotors 180 und damit auch der Spindeldrehzahl nach der Schlagerkennung umfasst. Die Ausführungsform, in welcher eine Reduzierung der Drehzahl durchgeführt wird, ist in Figur 5 dargestellt. Wieder wird die Handwerkzeugmaschine 100 zunächst im Betriebszustand "Kein Schlag" 310 betrieben, der durch den durch den Graphen f repräsentierten Verlauf der Motordrehzahl gekennzeichnet ist. Nachdem im Bereich 310` eine Schlagerkennung erfolgt ist, wird die Motordrehzahl im Beispiel um eine bestimmte Amplitude reduziert, was durch die Graphen f` bzw. f" dargestellt ist.

Die Amplitude oder Höhe der Änderung der Drehzahl des Elektromotors 180, für den Ast f" des Graphen f in Figur 5 durch die Δ_{D} gekennzeichnet, kann in einer Ausführungsform der Erfindung durch den Anwender eingestellt werden. Durch das Absenken der Drehzahl hat der Benutzer mehr Zeit zu reagieren, wenn sich der Schraubenkopf der Oberfläche des Befestigungsträgers 902 nähert. Sobald der Anwender der Ansicht ist, dass der Schraubenkopf bündig genug zur Auflagefläche liegt, kann er mithilfe des Schalters die Handwerkzeugmaschine 100 stoppen. Im Vergleich zum Stoppen der Handwerkzeugmaschine 100 nach der Schlagerkennung hat die Änderung der Motordrehzahl, im Beispiel der Figur 5 eine Reduzierung, den Vorteil, dass durch das anwenderbestimmte Abschalten diese Routine weitgehend unabhängig vom Anwendungsfall ist.

In einer Ausführungsform der Erfindung ist die Amplitude Δ_{D} der Änderung der Drehzahl des Elektromotors 180 und/oder ein Zielwert der Drehzahl des Elektromotors 180 durch einen Benutzer der Handwerkzeugmaschine 100 definierbar, was die Flexibilität dieser Routine im Sinne einer Anwendbarkeit für unterschiedlichste Anwendungsfälle nochmals erhöht.

Die Änderung der Drehzahl des Elektromotors 180 erfolgt in Ausführungsformen der Erfindung mehrfach und/oder dynamisch. Insbesondere kann vorgesehen sein, dass die Änderung der Drehzahl des Elektromotors 180 zeitlich gestaffelt und/oder entlang einer Kennlinie der Drehzahländerung erfolgt, und/oder in Abhängigkeit des Arbeitsfortschritts der Handwerkzeugmaschine 100.

Beispiele hierfür umfassen unter anderem Kombinationen aus Drehzahlreduzierung und Drehzahlerhöhung. Außerdem können verschiedene Routinen bzw. deren Kombinationen zeitversetzt zur Schlagerkennung durchgeführt werden. Ferner umfasst die Erfindung auch Ausführungsformen, bei denen ein zeitlicher Versatz zwischen zwei oder mehr Routinen vorgesehen ist. Wenn zum Beispiel direkt nach der Schlagerkennung die Motordrehzahl reduziert wird, kann die Motordrehzahl nach einem bestimmten Zeitwert auch wieder erhöht werden. Ferner sind Ausführungsformen vorgesehen, bei denen nicht nur verschiedene Routinen selbst, sondern auch der Zeitversatz zwischen den Routinen durch eine Kennlinie vorgegeben ist.

Wie eingangs erwähnt, umfasst die Erfindung Ausführungsformen, bei denen der Arbeitsfortschritt durch einen Wechsel von dem Betriebszustand "Schlag" in einem Bereich 320 zum Betriebszustand "Kein Schlag" in einem Bereich 310 gekennzeichnet ist, was in Figur 6 veranschaulicht ist.

Ein solcher Übergang der Betriebszustände der Handwerkzeugmaschine ist beispielsweise bei einem Arbeitsfortschritt gegeben, bei dem eine Schraube 900 von einem Befestigungsträger 902 loskommt, also bei einem Ausschraubvorgang, was im unteren Bereich der Figur 6 schematisch dargestellt ist. Wie auch in Figur 3 repräsentiert in Figur 6 der Graph f die Drehzahl des Elektromotors 180, und der Graph g das Drehmoment.

Wie bereits im Zusammenhang mit anderen Ausführungsformen der Erfindung erläutert, wird auch hier mit Hilfe des Auffindens von charakteristischen Signalformen der Betriebszustand der Handwerkmaschine erfasst, im vorliegenden Fall der Betriebszustand des Schlagwerks.

Im Betriebszustand "Schlag", in Figur 6 also im Bereich 320, dreht die Schraube 900 nicht und es liegt ein hohes Moment g an. Mit anderen Worten, die Spindeldrehzahl ist in diesem Zustand gleich Null. Im Betriebszustand "kein Schlag", in Figur 6 also im Bereich 310, sinkt das Moment g schnell ab, was wiederum für eine ebenso schnelle Erhöhung der Spindel- und Motordrehzahl f sorgt. Durch diese rapide Erhöhung der Motordrehzahl f, hervorgerufen durch das Absinken des Momentes g ab dem Zeitpunkt des Lösens der Schraube 900 von dem Befestigungsträger 902, ist es für den Anwender oftmals schwer, die sich lösende Schraube 900 oder Schraubenmutter aufzunehmen und am Herunterfallen zu hindern.

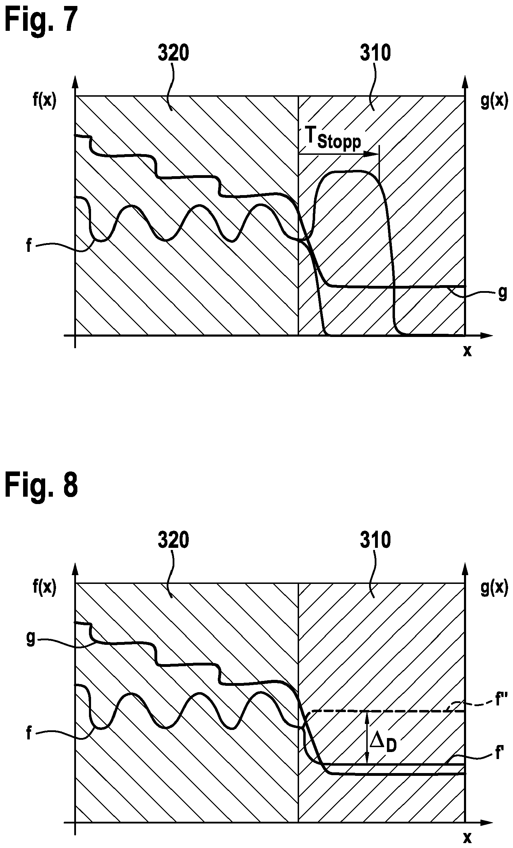

Das erfindungsgemäße Verfahren kann zur Anwendung kommen, um zu verhindern, dass ein Gewindemittel, das eine Schraube 900 oder eine Mutter sein kann, nach dem Lösen von dem Befestigungsträger 902 so schnell abgeschraubt wird, dass sie herunterfällt. Hierzu wird auf Figur 7 Bezug genommen. Figur 7 entspricht hinsichtlich der dargestellten Achsen und Graphen im wesentlichen der Figur 6, und entsprechende Bezugszeichen kennzeichnende entsprechende Merkmale.

In einer Ausführungsform umfasst die Routine in Schritt S5 das Stoppen der Handwerkzeugmaschine 100 sofort nachdem festgestellt wird, dass die Handwerkzeugmaschine 100 den zu erkennenden Arbeitsfortschritt erkennt, im Beispiel den Betriebsmodus "Kein Schlag", was in Figur 7 durch einen steil abfallenden Ast f` des Graphen f der Motordrehzahl im Bereich 310 dargestellt ist. In alternativen Ausführungsformen kann eine Zeit T_{Stopp} durch den Anwender definiert werden, nach welcher das Gerät stoppt. In der Figur ist dies durch den Ast f" des Graphen f der Motordrehzahl dargestellt. Der Fachmann erkennt, dass die Motordrehzahl wie auch in Figur 6 gezeigt nach dem Übergang vom Bereich 320 (Betriebszustand "Schlag") in den Bereich 310 (Betriebszustand "Kein Schlag") zunächst schnell anwächst und nach Ablauf des Zeitraums T_{Stopp} steil abfällt.

Bei geeigneter Wahl des Zeitraums T_{Stopp} ist es möglich, dass die Motordrehzahl genau dann auf "Null" fällt, dass die Schraube 900 oder die Mutter gerade noch im Gewinde sitzt. In diesem Fall kann der Anwender die Schraube 900 oder Mutter mit wenigen Gewindeumdrehungen entnehmen oder alternativ im Gewinde belassen um zum Beispiel eine Schelle zu öffnen.

Eine weitere Ausführungsform der Erfindung wird im Folgenden anhand Figur 8 beschrieben. In diesem Fall erfolgt nach dem Übergang vom Bereich 320 (Betriebszustand "Schlag") in den Bereich 310 (Betriebszustand "Kein Schlag") eine Reduzierung der Motordrehzahl. Die Amplitude oder Höhe der Reduzierung ist in der Figur mit Δ_{D} als Maß zwischen einem Mittelwert f" der Motordrehzahl im Bereich 320 und der abgesenkten Motordrehzahl f` angegeben. Diese Absenkung kann in bestimmten Ausführungsformen durch den Anwender eingestellt werden, insbesondere durch die Angabe eines Zielwertes der Drehzahl der Handwerkzeugmaschine 100, der in Figur 8 auf dem Niveau des Astes f` liegt.

Durch das Absenken der Motordrehzahl und damit auch der Spindeldrehzahl hat der Benutzer mehr Zeit zu reagieren, wenn sich der Kopf der Schraube 900 von der Schraubenauflagefläche löst. Sobald der Anwender der Meinung ist, dass der Schraubenkopf oder die Mutter weit genug geschraubt wurde, kann er mithilfe des Schalters die Handwerkzeugmaschine 100 stoppen.

Im Vergleich zu den in Zusammenhang mit Figur 7 beschriebenen Ausführungsformen, bei denen unmittelbar oder mit Verzögerung nach dem Übergang vom Bereich 320 (Betriebszustand "Schlag") in den Bereich 310 (Betriebszustand "Kein Schlag") die Handwerkzeugmaschine 100 gestoppt wird, hat die Drehzahlreduzierung den Vorteil einer weitergehenden Unabhängigkeit vom Anwendungsfall, da letztlich der Anwender bestimmt, wann die Handwerkzeugmaschine nach der Drehzahlreduzierung abgeschaltet wird. Dies kann beispielsweise hilfreich sein bei langen Gewindestangen. Hier gibt es Anwendungsfälle, bei denen nach dem Lösen der Gewindestange und dem damit einhergehenden Aussetzen des Schlagwerkes noch ein mehr oder weniger langer Ausschraubprozess ausgeführt werden muss. Ein Abschalten der Handwerkzeugmaschine 100 nach Aussetzen des Schlagwerkes wäre in diesen Fällen also nicht zweckdienlich.

Es sei erwähnt, dass in einigen Ausführungsformen der Erfindung vorgesehen ist, dass auch die in dem Verfahrensschritt S5 verwendeten Parameter der ersten Routine wie vorstehend beschrieben, beispielsweise Verlauf und Amplitude einer Drehzahlreduktion oder -erhöhung, durch einen Einlernvorgang anhand von Beispielanwendungen und/oder Schraubprofilen definiert werden können.

In einigen Ausführungsformen der Erfindung wird einem Benutzer der Handwerkzeugmaschine ein Arbeitsfortschritt unter Verwendung einer Ausgabevorrichtung der Handwerkzeugmaschine ausgegeben.

Es werden im Folgenden einige technische Zusammenhänge und Ausführungsformen betreffend der Durchführung der Verfahrensschritte S1-S4 erläutert.

In praktischen Anwendungen kann vorgesehen sein, dass die Verfahrensschritte S2 und S3 sich wiederholend während des Betriebs einer Handwerkzeugmaschine 100 ausgeführt werden, um den Arbeitsfortschritt der ausgeführten Anwendung zu überwachen. Zu diesem Zweck kann in Verfahrensschritt S2 eine Segmentierung des ermittelten Signals der Betriebsgröße 200 erfolgen, sodass die Verfahrensschritte S2 und S3 an Signalsegmenten, vorzugsweise stets gleicher, festgelegter Länge, durchgeführt werden.

Zu diesem Zweck kann das Signal der Betriebsgröße 200 als Folge von Messwerten in einem Speicher, vorzugsweise einem Ringspeicher, gespeichert werden. In dieser Ausführungsform umfasst die Handwerkzeugmaschine 100 den Speicher, vorzugsweise den Ringspeicher.

Wie im Zusammenhang mit Figur 2 bereits erwähnt, wird in bevorzugten Ausführungsformen der Erfindung in Verfahrensschritt S2 das Signal der Betriebsgröße 200 als Zeitverlauf von Messwerten der Betriebsgröße ermittelt, oder als Messwerte der Betriebsgröße als eine mit dem Zeitverlauf korrelierende Größe des Elektromotors 180. Dabei können die Messwerte diskret, quasi kontinuierlich oder kontinuierlich sein.

Eine Ausführungsform sieht dabei vor, dass das Signal der Betriebsgröße 200 in Verfahrensschritt S2 als Zeitverlauf von Messwerten der Betriebsgröße aufgenommen wird und in einem dem Verfahrensschritt S2 folgenden Verfahrensschritt S2a eine Transformation des Zeitverlaufs der Messwerte der Betriebsgrö-βe in einen Verlauf der Messwerte der Betriebsgröße als eine mit dem Zeitverlauf korrelierende Größe des Elektromotors 180 erfolgt, wie beispielsweise der Drehwinkel der Werkzeugaufnahme 140, der Motordrehwinkel, eine Beschleunigung, ein Ruck, insbesondere höherer Ordnung, eine Leistung, oder eine Energie.

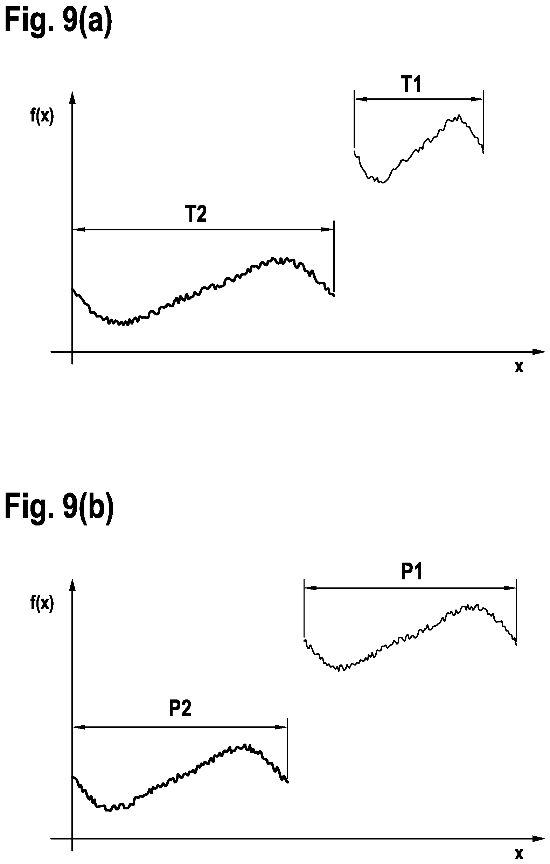

Die Vorteile dieser Ausführungsform werden im Folgenden anhand Figur 9 beschrieben. Ähnlich zu Figur 2 zeigt Figur 9a Signale f(x) einer Betriebsgröße 200 über eine Abszisse x, in diesem Fall über die Zeit t. Wie in Figur 2 kann die Betriebsgröße eine Motordrehzahl oder ein mit der Motordrehzahl korrelierender Parameter sein.

Die Abbildung enthält zwei Signalverläufe der Betriebsgröße 200, die jeweils einem Arbeitsfortschritt zugeordnet sein können, im Falle eines Drehschlagschraubers also beispielsweise dem Drehschlagschraubmodus. In beiden Fällen umfasst das Signal eine Wellenlänge eines idealisiert als sinusförmig angenommenen Schwingungsverlaufs, wobei das Signal mit kürzerer Wellenlänge, T1 Verlauf mit höherer Schlagfrequenz, und das Signal mit längerer Wellenlänge, T2 einen Verlauf mit niedrigerer Schlagfrequenz, aufweist.

Beide Signale können mit derselben Handwerkzeugmaschine 100 bei verschiedenen Motorgeschwindigkeiten erzeugt werden und sind unter anderem abhängig davon, welche Umdrehungsgeschwindigkeit der Benutzer über den Bedienschalter von der Handwerkzeugmaschine 100 anfordert.

Soll nun beispielsweise der Parameter "Wellenlänge" zur Definition der zustandstypischen Modellsignalform 240 herangezogen werden, müssten also im vorliegenden Fall zumindest zwei verschiedene Wellenlängen T1 und T2 als mögliche Teile der zustandstypischen Modellsignalform hinterlegt sein, damit der Vergleich des Signals der Betriebsgröße 200 mit der zustandstypischen Modellsignalform 240 in beiden Fällen zum Ergebnis "Übereinstimmung" führt. Da sich die Motordrehzahl über der Zeit allgemein und in großem Umfang ändern kann, führt dies dazu, dass auch die gesuchte Wellenlänge variiert und dadurch die Methoden zur Erkennung dieser Schlagfrequenz dementsprechend adaptiv eingestellt werden müssten.

Bei einer Vielzahl von möglichen Wellenlängen würde der Aufwand des Verfahrens und der Programmierung entsprechend schnell ansteigen.

In der bevorzugten Ausführungsform werden daher die Zeitwerte der Abszisse in mit den Zeitwerten korrelierende Werte transformiert, wie beispielsweise Beschleunigungswerte, Ruckwerte höherer Ordnung, Leistungswerte, Energiewerte, Frequenzwerte, Drehwinkelwerte der Werkzeugaufnahme 140 oder Drehwinkelwerte des Elektromotors 180. Dies ist möglich, weil sich durch das starre Übersetzungsverhältnis von Elektromotor 180 zum Schlagwerk und zur Werkzeugaufnahme 140 eine direkte, bekannte Abhängigkeit von Motordrehzahl zur Schlagfrequenz ergibt. Durch diese Normierung wird ein von der Motordrehzahl unabhängiges Schwingungssignal gleichbleibender Periodizität erreicht, was in Figur 3b durch die beiden aus der Transformation der zu T1 und T2 gehörigen Signale dargestellt ist, wobei beide Signale nun die gleiche Wellenlänge P1=P2 aufweisen.

Entsprechend kann in dieser Ausführungsform der Erfindung die zustandstypische Modellsignalform 240 gültig für alle Drehzahlen durch einen einzigen Parameter der Wellenlänge über die mit der Zeit korrelierende Größe festgelegt werden, wie beispielsweise den Drehwinkel der Werkzeugaufnahme 140, den Motordrehwinkel, eine Beschleunigung, einen Ruck, insbesondere höherer Ordnung, eine Leistung, oder eine Energie.

In einer bevorzugten Ausführungsform erfolgt der Vergleich des Signals der Betriebsgröße 200 in Verfahrensschritt S3 mit einem Vergleichsverfahren, wobei das Vergleichsverfahren zumindest ein frequenzbasiertes Vergleichsverfahren und/oder ein vergleichendes Vergleichsverfahren umfasst. Das Vergleichsverfahren vergleicht das Signal der Betriebsgröße 200 mit der zustandstypischen Modellsignalform 240, ob zumindest der Schwellwert der Übereinstimmung erfüllt wird. Das Vergleichsverfahren vergleicht das gemessene Signal der Betriebsgrö-βe 200 mit dem Schwellwert der Übereinstimmung. Das frequenzbasierte Vergleichsverfahren umfasst zumindest die Bandpassfilterung und/oder die Frequenzanalyse. Das vergleichende Vergleichsverfahren umfasst zumindest die Parameterschätzung und/oder die Kreuzkorrelation. Das frequenzbasierte und das vergleichende Vergleichsverfahren wird im Folgenden detaillierter beschrieben.

In Ausführungsformen mit Bandpassfilterung wird das, gegebenenfalls wie beschrieben, auf eine mit der Zeit korrelierenden Größe transformierte Eingangssignal über einen oder mehrere Bandpässe gefiltert, deren Durchlassbereiche mit einer oder mehreren zustandstypischen Modellsignalformen übereinstimmen. Der Durchlassbereich ergibt sich aus der zustandstypischen Modellsignalform 240. Es ist auch denkbar, dass der Durchlassbereich mit einer im Zusammenhang mit der zustandstypischen Modellsignalform 240 festgelegten Frequenz übereinstimmt. In dem Fall, dass Amplituden dieser Frequenz einen vorher festgelegten Grenzwert überschreiten, wie dies bei Erreichen des zu erkennenden Arbeitsfortschritts der Fall ist, führt der Vergleich in Verfahrensschritt S3 dann zu dem Ergebnis, dass das Signal der Betriebsgröße 200 der zustandstypischen Modellsignalform 240 gleicht, und dass somit der zu erkennende Arbeitsfortschritt erreicht ist. Die Festlegung eines Amplitudengrenzwertes kann in dieser Ausführungsform als Ermittlung der Übereinstimmungsbewertung der zustandstypischen Modellsignalform 240 mit dem Signal der Betriebsgröße 200 aufgefasst werden, auf Grundlage derer in Verfahrensschritt S4 entschieden wird, ob der zu erkennende Arbeitsfortschritt vorliegt oder nicht.

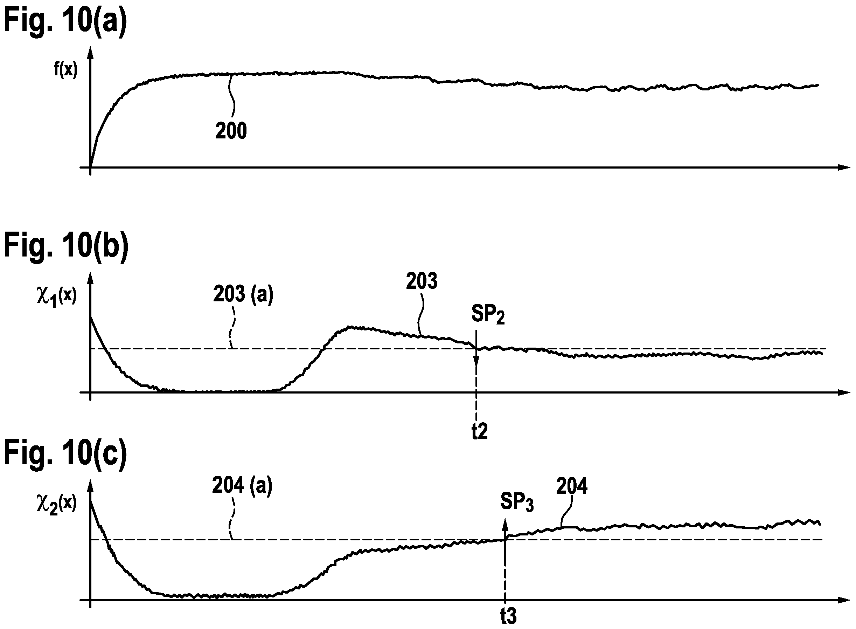

Anhand der Figur 10 soll die Ausführungsform erläutert werden, in welcher als frequenzbasiertes Vergleichsverfahren die Frequenzanalyse zum Einsatz kommt. In diesem Fall wird das Signal der Betriebsgröße 200, welches in Figur 10(a) dargestellt ist und beispielsweise dem Verlauf der Drehzahl des Elektromotors 180 über der Zeit entspricht, auf Grundlage der Frequenzanalyse, beispielsweise der schnellen Fourier-Transformation (Fast Fourier Transformation, FFT), von einem Zeitbereich in den Frequenzbereich mit entsprechender Gewichtung der Frequenzen transformiert. Hierbei ist der Begriff "Zeitbereich" gemäß der obigen Ausführungen sowohl als "Verlauf der Betriebsgröße über die Zeit" als auch als "Verlauf der Betriebsgröße als eine mit der Zeit korrelierenden Größe" zu verstehen.

Die Frequenzanalyse in dieser Ausprägung ist als mathematisches Werkzeug der Signalanalyse aus vielen Bereichen der Technik hinreichend bekannt und wird unter anderem dazu verwendet, gemessene Signale als Reihenentwicklungen gewichteter periodischer, harmonischer Funktionen unterschiedlicher Wellenlänge anzunähern. In der Figur 10(b) und 10(c) beispielsweise geben Gewichtungsfaktoren κ₁(x) und κ₂(x) als Funktionsverläufe 203 und 204 über die Zeit an, ob und wie stark die korrespondierenden Frequenzen bzw. Frequenzbänder, die an dieser Stelle der Übersichtlichkeit halber nicht angegeben sind, in dem untersuchten Signal, also dem Verlauf der Betriebsgröße 200, vorhanden sind.

Bezogen auf das erfindungsgemäße Verfahren kann mithilfe der Frequenzanalyse also festgestellt werden, ob und mit welcher Amplitude die der zustandstypischen Modellsignalform 240 zugeordnete Frequenz im Signal der Betriebsgröße 200 vorhanden ist. Darüber hinaus können jedoch auch Frequenzen definiert werden, deren Nicht-Vorhandensein ein Maß für das Vorliegen des zu erkennenden Arbeitsfortschrittes sind. Wie im Zusammenhang mit der Bandpassfilterung erwähnt, kann ein Grenzwert der Amplitude festgelegt werden, welcher ein Maß des Grades der Übereinstimmung des Signals der Betriebsgröße 200 mit der zustandstypischen Modellsignalform 240 ist.

Im Beispiel der Figur 10(b) etwa fällt zum Zeitpunkt t₂ (Punkt SP₂) die Amplitude κ₁(x) einer ersten, in der zustandstypischen Modellsignalform 240 typischerweise nicht vorzufindenden Frequenz im Signal der Betriebsgröße 200 unter einen zugehörigen Grenzwert 203(a), was im Beispiel ein notwendiges, jedoch nicht hinreichendes Kriterium für das Vorliegen des zu erkennenden Arbeitsfortschritts ist. Zum Zeitpunkt t₃ (Punkt SP₃) übersteigt die Amplitude κ₂(x) einer zweiten, in der zustandstypischen Modellsignalform 240 typischerweise vorzufindenden Frequenz im Signal der Betriebsgröße 200 einen zugehörigen Grenzwert 204(a). In der zugehörigen Ausführungsform der Erfindung ist das gemeinsame Vorliegen des Unter- bzw. Überschreitens der Grenzwerte 203(a), 204(a) durch die Amplitudenfunktionen κ₁(x) bzw. κ₂(x) das maßgebliche Kriterium für die Übereinstimmungsbewertung des Signals der Betriebsgröße 200 mit der zustandstypischen Modellsignalform 240. Entsprechend wird in diesem Fall in Verfahrensschritt S4 festgestellt, dass der zu erkennende Arbeitsfortschritt erreicht ist.

In alternativen Ausführungsformen der Erfindung wird nur eines dieser Kriterien genutzt, oder auch Kombinationen eines der oder beider Kriterien mit anderen Kriterien wie beispielsweise einem Erreichen einer Solldrehzahl des Elektromotors 180.

In Ausführungsformen, in denen das vergleichende Vergleichsverfahren verwendet wird, wird das Signal der Betriebsgröße 200 mit der zustandstypischen Modellsignalform 240 verglichen, um herauszufinden, ob das gemessene Signal der Betriebsgröße 200 zumindest eine Übereinstimmung von 50% mit der zustandstypischen Modellsignalform 240 aufweist und damit der vorgegebene Schwellwert erreicht wird. Denkbar ist auch, dass das Signal der Betriebsgröße 200 mit der zustandstypischen Modellsignalform 240 vergleichen wird, um eine Übereinstimmung der beiden Signale miteinander zu ermitteln.

In Ausführungsformen des erfindungsgemäßen Verfahrens, bei denen die Parameterschätzung als vergleichendes Vergleichsverfahren verwendet wird, wird das gemessene Signal der Betriebsgrößen 200 mit der zustandstypische Modellsignalform 240 verglichen, wobei für die zustandstypische Modellsignalform 240 geschätzte Parameter identifiziert werden. Mit Hilfe der geschätzten Parameter kann ein Maß der Übereinstimmung des gemessenen Signals der Betriebsgrö-βen 200 mit der zustandstypischen Modellsignalform 240 ermittelt werden, ob der zu erkennende Arbeitsfortschritt erreicht ist. Die Parameterschätzung basiert hierbei auf der Ausgleichsrechnung, die eine, dem Fachmann bekannte, mathematische Optimierungsmethode ist. Die mathematische Optimierungsmethode ermöglicht mit Hilfe der geschätzten Parameter die zustandstypische Modellsignalform 240 an eine Reihe von Messdaten des Signals der Betriebsgröße 200 anzugleichen. Abhängig von einem Maß der Übereinstimmung der mittels der geschätzten Parameter parametrisierten zustandstypischen Modellsignalform 240 und einem Grenzwert kann die Entscheidung, ob der zu erkennende Arbeitsfortschritt erreicht ist, getroffen werden.

Mit Hilfe der Ausgleichsrechnung des vergleichenden Verfahrens der Parameterschätzung kann auch ein Maß einer Übereinstimmung der geschätzten Parameter der zustandstypischen Modellsignalform 240 zu dem gemessenen Signal der Betriebsgröße 200 ermittelt werden.

In einer Ausführungsform des erfinderischen Verfahrens wird als vergleichendes Vergleichsverfahren in Verfahrensschritt S3 das Verfahren der Kreuzkorrelation verwendet. Wie die im vorstehenden beschriebenen mathematischen Verfahren auch, ist das Verfahren der Kreuzkorrelation dem Fachmann an sich bekannt. Bei dem Verfahren der Kreuzkorrelation wird die zustandstypische Modellsignalform 240 mit dem gemessenen Signal der Betriebsgröße 200 korreliert.

Im Vergleich zum weiter oben vorgestellten Verfahren der Parameterschätzung ist das Ergebnis der Kreuzkorrelation wieder eine Signalfolge mit einer addierten Signallänge aus einer Länge des Signals der Betriebsgröße 200 und der zustandstypischen Modellsignalform 240, welches die Ähnlichkeit der zeitverschobenen Eingangssignale darstellt. Dabei stellt das Maximum dieser Ausgangsfolge den Zeitpunkt der höchsten Übereinstimmung der beiden Signale, also des Signals der Betriebsgröße 200 und der zustandstypischen Modelsignalform 240, dar und ist damit auch ein Maß für die Korrelation selbst, welches in dieser Ausführungsform in Verfahrensschritt S4 als Entscheidungskriterium für das Erreichen des zu erkennenden Arbeitsfortschritts verwendet wird. In der Implementierung im erfindungsgemäßen Verfahren ist ein wesentlicher Unterschied zur Parameterschätzung, dass für die Kreuzkorrelation beliebige zustandstypische Modelsignalformen verwendet werden können, während bei der Parameterschätzung die zustandstypische Modellsignalform 240 durch parametrisierbare mathematische Funktionen dargestellt werden können muss.

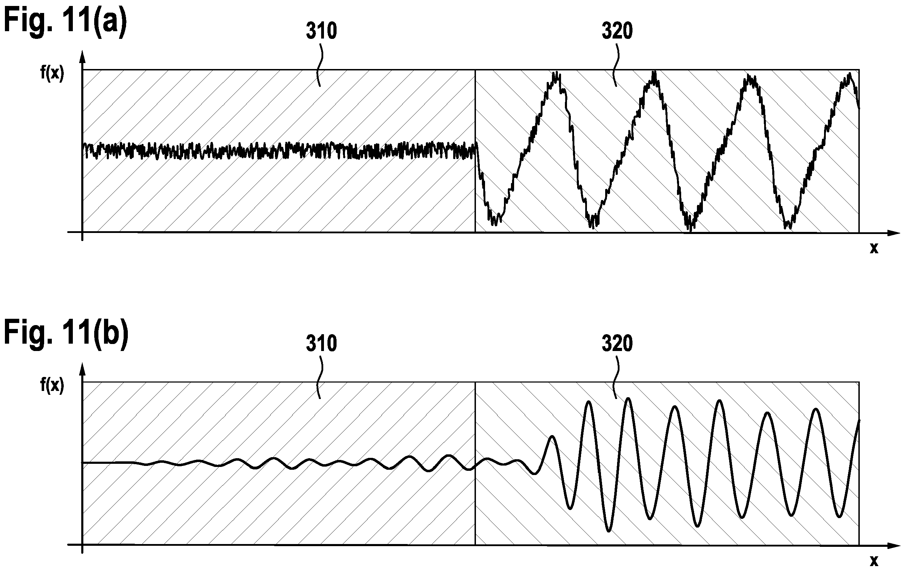

Figur 11 zeigt das gemessene Signal der Betriebsgröße 200 für den Fall, dass als das frequenzbasierte Vergleichsverfahren die Bandpassfilterung verwendet wird. Hierbei ist als Abszisse x die Zeit oder eine mit der Zeit korrelierende Größe aufgetragen. Figur 11a zeigt das gemessene Signal der Betriebsgröße, als Eingangssignal der Bandpassfilterung, wobei im ersten Bereich 310 die Handwerkzeugmaschine 100 im Schraubbetrieb betrieben wird. Im zweiten Bereich 320 wird die Handwerkzeugmaschine 100 im Drehschlagbetrieb betrieben. Figur 11b stellt das Ausgangssignal dar, nachdem der Bandpass das Eingangssignal gefiltert hat.

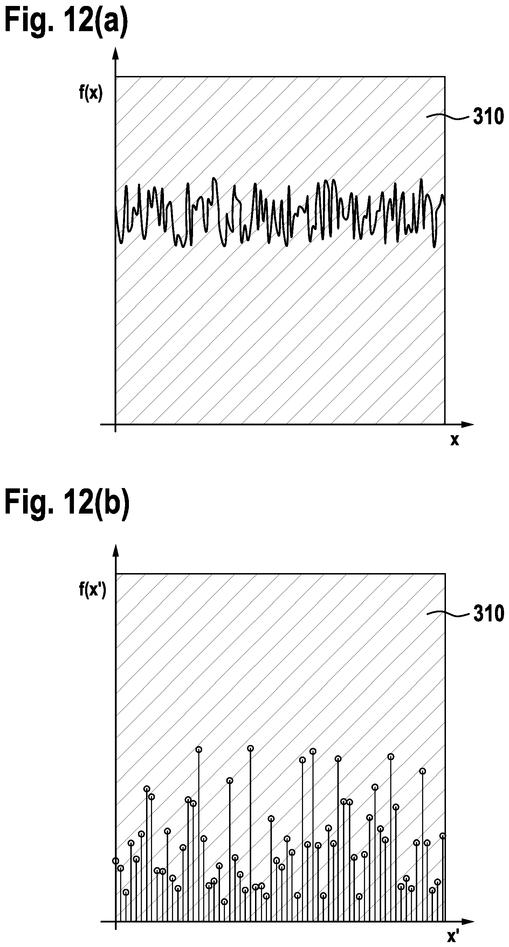

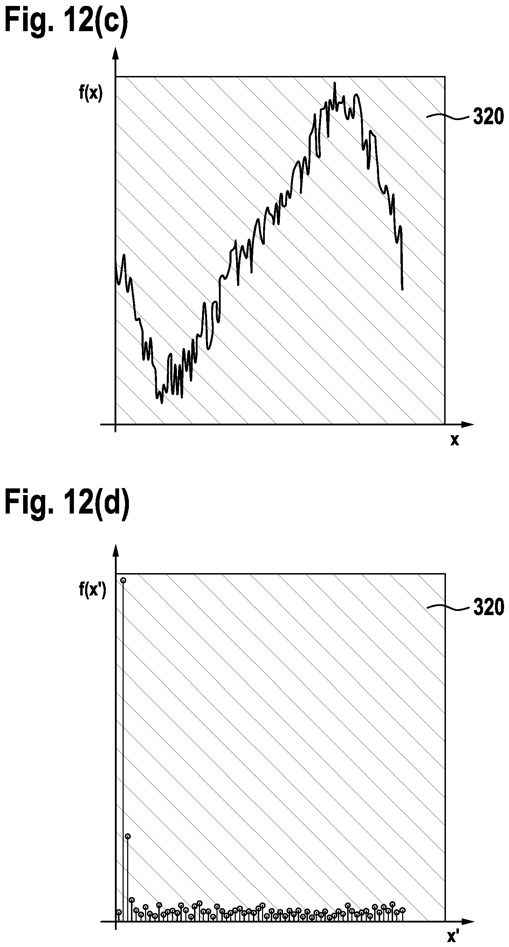

Figur 12 stellt das gemessene Signal der Betriebsgröße 200 für den Fall dar, dass als das frequenzbasierte Vergleichsverfahren die Frequenzanalyse verwendet wird. In Figur 12a und b ist der erste Bereich 310 gezeigt, bei dem die Handwerkzeugmaschine 100 im Schraubbetrieb ist. Auf der Abszisse x der Figur 6a ist die Zeit t oder einer mit der Zeit korrelierten Größe aufgetragen. In Figur 12b ist das Signal der Betriebsgröße 200 transformiert dargestellt, wobei beispielsweise mittels einer Fast-Fourier-Transformation von einem Zeitbereich in einen Frequenzbereich transformiert werden kann. Auf der Abszisse x` der Figur 12b ist beispielsweise die Frequenz f aufgetragen, sodass die Amplituden des Signals der Betriebsgröße 200 dargestellt sind. In den Figuren 12c und d ist der zweite Bereich 320 dargestellt, in dem die Handwerkzeugmaschine 100 im Drehschlagbetrieb ist. Figur 12c zeigt das gemessene Signal der Betriebsgröße 200 aufgetragen über die Zeit im Drehschlagbetrieb dar. Figur 12d zeigt das transformierte Signal der Betriebsgröße 200, wobei das Signal der Betriebsgröße 200 über die Frequenz f als Abszisse x` aufgetragen ist. Figur 12d zeigt charakteristische Amplituden für den Drehschlagbetrieb.

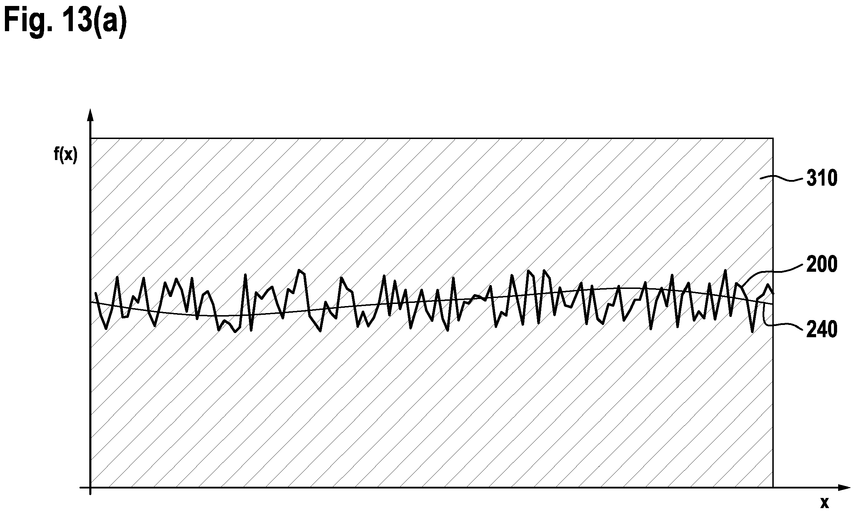

Figur 13a zeigt einen typischen Fall eines Vergleichs mittels des vergleichenden Vergleichsverfahrens der Parameterschätzung zwischen dem Signal einer Betriebsgröße 200 und einer zustandstypischen Modellsignalform 240 in dem in Figur 2 beschriebenen ersten Bereich 310. Während die zustandstypische Modellsignalform 240 einen im Wesentlichen trigonometrischen Verlauf aufweist, hat das Signal der Betriebsgröße 200 einen davon stark abweichenden Verlauf. Unabhängig von der Wahl eines der oben beschriebenen Vergleichsverfahren hat in diesem Fall der in Verfahrensschritt S3 durchgeführte Vergleich zwischen der zustandstypischen Modellsignalform 240 und dem Signal der Betriebsgröße 200 zum Ergebnis, dass der Grad der Übereinstimmung der beiden Signale derart gering ist, dass in Verfahrensschritt S4 der zu erkennende Arbeitsfortschritt nicht erkannt wird.

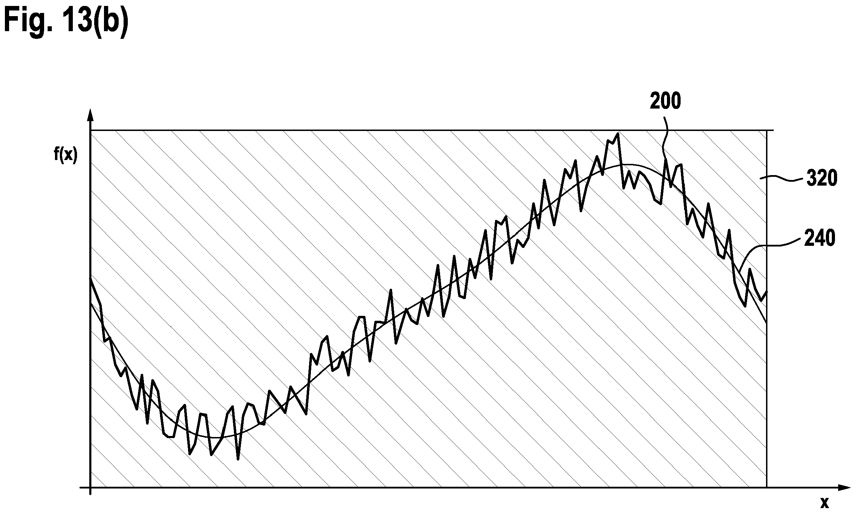

In Figur 13b ist dagegen der Fall dargestellt, in dem der zu erkennende Arbeitsfortschritt vorliegt und daher die zustandstypische Modellsignalform 240 und das Signal der Betriebsgröße 200 insgesamt einen hohen Grad der Übereinstimmung aufweisen, auch wenn an einzelnen Messpunkten Abweichungen feststellbar sind. So kann im vergleichenden Vergleichsverfahren der Parameterschätzung die Entscheidung, ob der zu erkennende Arbeitsfortschritt erreicht wurde, getroffen werden.

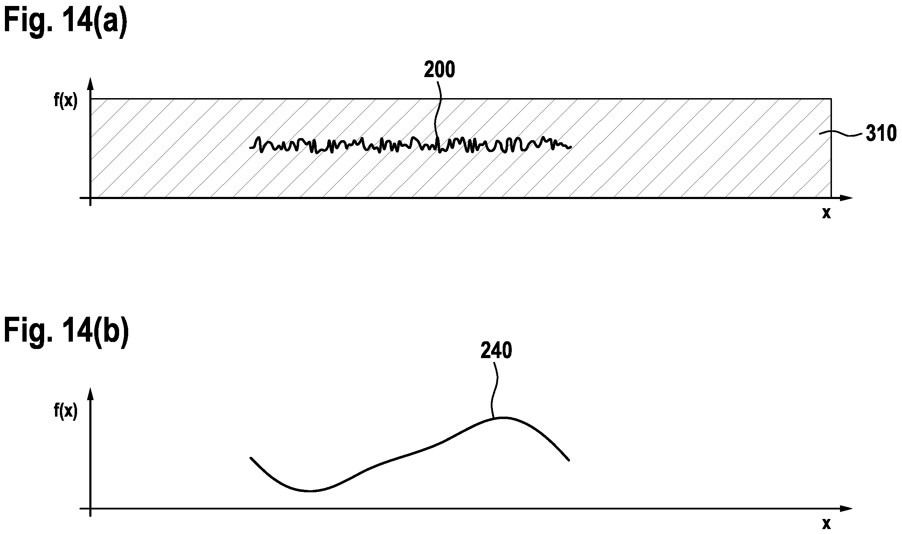

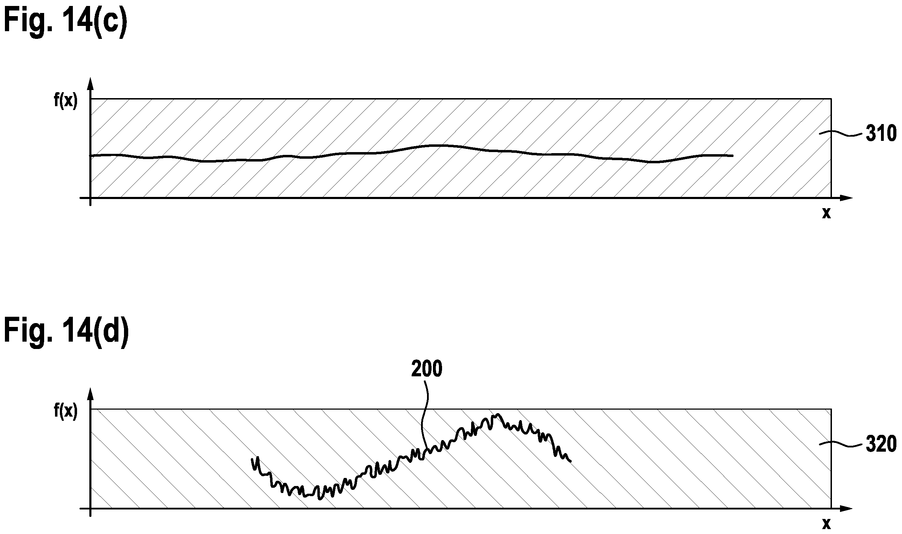

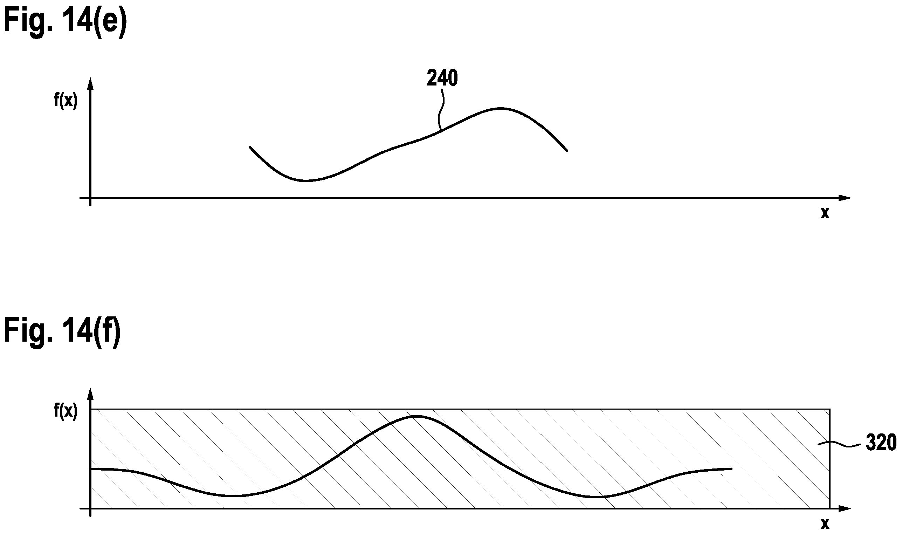

Figur 14 zeigt den Vergleich der zustandstypischen Modellsignalform 240, siehe Figur 14b und 14e, mit dem gemessenen Signal der Betriebsgröße 200, siehe Figur 14a und 14d, für den Fall, dass als vergleichendes Vergleichsverfahren die Kreuzkorrelation verwendet wird. In den Figuren 14a - f sind auf der Abszisse x die Zeit oder eine mit der Zeit korrelierende Größe aufgetragen. In den Figuren 14a - c ist der erste Bereich 310, dem Schraubbetrieb entsprechend, gezeigt. In den Figuren 14d - f ist der dritte Bereich 324, korrespondierend mit dem zu erkennenden Arbeitsfortschritt, gezeigt. Wie weiter oben beschrieben, wird das gemessene Signal der Betriebsgröße, Figur 14a und Figur 14d, mit der zustandstypischen Modellsignalform, Figur 14b und 14e, korreliert. In den Figuren 14c und 14f sind jeweilige Ergebnisse der Korrelationen dargestellt. In Figur 14c wird das Ergebnis der Korrelation während des ersten Bereichs 310 gezeigt, wobei erkennbar ist, dass eine geringe Übereinstimmung der beiden Signale vorliegt. Im Beispiel der Figur 14c wird daher in Verfahrensschritt S4 entschieden, dass der zu erkennende Arbeitsfortschritt nicht erreicht ist. In Figur 14f ist das Ergebnis der Korrelation während des dritten Bereich 324 gezeigt. Es ist in Figur 14f erkennbar, dass eine hohe Übereinstimmung vorliegt, sodass in Verfahrensschritt S4 entschieden wird, dass der zu erkennende Arbeitsfortschritt erreicht ist.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung.

## Patentansprüche

1. Verfahren zum Betrieb einer Handwerkzeugmaschine (100), die Handwerkzeugmaschine (100) umfassend einen Elektromotor (180), das Verfahren umfassend die Verfahrensschritte:
| | |
|---|---|
| S1 | Bereitstellen von Vergleichsinformationen, umfassend die Schritte: |
| S1a | Bereitstellen zumindest einer Modellsignalform (240), wobei die Modellsignalform (240) einem Arbeitsfortschritt der Handwerkzeugmaschine (100) zuordenbar ist; |
| S1b | Bereitstellen eines Schwellwertes der Übereinstimmung; |
| S2 | Ermitteln eines Signals einer Betriebsgröße (200) des Elektromotors (180); |
| S3 | Vergleichen des Signals der Betriebsgröße (200) mit der Modellsignalform (240) und Ermitteln einer Übereinstimmungsbewertung aus dem Vergleich, wobei die Übereinstimmungsbewertung zumindest teilweise anhand des Schwellwertes der Übereinstimmung erfolgt; |
| S4 | Erkennen des Arbeitsfortschrittes zumindest teilweise anhand der in Verfahrensschritt S3 ermittelten Übereinstimmungsbewertung; |
wobei das Bereitstellen der Vergleichsinformationen zumindest teilweise auf der Basis eines Einlernvorgangs erfolgt.

2. Verfahren nach Anspruch 1, **dadurch gekennzeichnet, dass** der Einlernvorgang das Ausführen oder Einlesen zumindest einer Beispielanwendung der Handwerkzeugmaschine (100) beinhaltet, wobei die zumindest eine Beispielanwendung ein Erreichen eines festgelegten Arbeitsfortschrittes der Handwerkzeugmaschine (100) umfasst.

3. Verfahren nach Anspruch 2, **dadurch gekennzeichnet, dass** die Modellsignalform (240) zumindest teilweise auf Basis des Einlernvorgangs bereitgestellt wird, und dass der Einlernvorgang die folgenden Verfahrensschritte umfasst
| | |
|---|---|
| A1 | Ermitteln eines Signals einer Betriebsgröße (200`) des Elektromotors (180) anhand der Beispielanwendung; |
| A2 | Bestimmen einer der Beispielanwendung zugeordneten Modellsignalform (240`) anhand des Signals der Betriebsgröße (200`) während des Erreichens des festgelegten Arbeitsfortschrittes. |
| A2` | Bestimmen einer der Beispielanwendung zugeordneten Modellsignalform (240`) anhand des Signals der Betriebsgröße (200`), wie es zu dem Zeitpunkt des Erreichens des festgelegten Arbeitsfortschrittes vorliegt. |

4. Verfahren nach Anspruch 3, **dadurch gekennzeichnet, dass** der Einlernvorgang das Ausführen oder Einlesen von zumindest zwei Beispielanwendungen beinhaltet, und dass der Einlernvorgang das Ermitteln der Modellsignalform (240) aus den zwei oder mehr den Beispielanwendungen zugeordneten Modellsignalformen (240`) beinhaltet.

5. Verfahren nach einem der Ansprüche 2 bis 4, **dadurch gekennzeichnet, dass** der Schwellwert der Übereinstimmung zumindest teilweise auf Basis des Einlernvorgangs bereitgestellt wird, und dass der Einlernvorgang die folgenden Verfahrensschritte umfasst
| | |
|---|---|
| B1 | Bereitstellen zumindest einer Modellsignalform (240"), wobei die Modellsignalform (240") einem Arbeitsfortschritt der Handwerkzeugmaschine (100) zuordenbar ist; |
| B2 | Ermitteln eines Signals einer Betriebsgröße (200`) des Elektromotors (180); |
| B3 | Vergleichen des Signals der Betriebsgröße (200`) mit der Modellsignalform (240") zu einem Zeitpunkt eines Reduzierens einer Drehzahl des Elektromotors (180), insbesondere zu einem Zeitpunkt eines Stoppens der Handwerkzeugmaschine (100) durch den Benutzer, und Ermitteln eines der Beispielanwendung zugeordneten Schwellwertes der Übereinstimmung. |

6. Verfahren nach Anspruch 5, wobei in Schritt B1 die zumindest eine Modellsignalform nach einem Verfahren gemäß einem der Ansprüche 3 oder 4 bereitgestellt wird.

7. Verfahren nach einem der Ansprüche 5 oder 6, **dadurch gekennzeichnet, dass** der Einlernvorgang das Ausführen oder Einlesen von zumindest zwei Beispielanwendungen beinhaltet, und dass der Einlernvorgang das Ermitteln eines Mittelwertes des Schwellwertes der Übereinstimmung aus den zwei oder mehr den Beispielanwendungen zugeordneten Schwellwerten der Übereinstimmung beinhaltet.

8. Verfahren nach einem der Ansprüche 2 bis 7, **dadurch gekennzeichnet, dass** das Einlesen der zumindest einen Beispielanwendung das Einlesen eines beispielhaften Signals einer Betriebsgröße des Elektromotors durch die Handwerkzeugmaschine (100) beinhaltet.

9. Verfahren nach einem der vorstehenden Ansprüche, umfassend den Verfahrensschritt
| | |
|---|---|
| S5 | Ausführen einer ersten Routine der Handwerkzeugmaschine (100) zumindest teilweise auf Basis des in Verfahrensschritt S4 erkannten Arbeitsfortschrittes. |

10. Verfahren nach Anspruch 9, **dadurch gekennzeichnet, dass** die erste Routine das Stoppen des Elektromotors (180) unter Berücksichtigung eines definierten und/oder vorgebbaren, insbesondere durch einen Benutzer der Handwerkzeugmaschine (100) vorgebbaren, Parameters umfasst.

11. Verfahren nach einem der Ansprüche 9 oder 10, **dadurch gekennzeichnet, dass** die erste Routine eine Änderung, insbesondere eine Reduzierung und/oder eine Erhöhung, einer Drehzahl des Elektromotors (180) umfasst.

12. Verfahren nach Anspruch 11, **dadurch gekennzeichnet, dass** die Änderung der Drehzahl des Elektromotors (180) mehrfach und/oder dynamisch, insbesondere zeitlich gestaffelt und/oder entlang einer Kennlinie der Drehzahländerung und/oder anhand des Arbeitsfortschritts der Handwerkzeugmaschine (100) erfolgt, wobei die Änderung der Drehzahl zumindest teilweise anhand des Einlernvorgangs auf Basis der Beispielanwendungen bestimmt wird.

13. Verfahren nach einem der vorstehenden Ansprüche, **dadurch gekennzeichnet, dass** die Betriebsgröße eine Drehzahl des Elektromotors (180) oder eine mit der Drehzahl korrelierende Betriebsgröße ist.

14. Verfahren nach einem der vorstehenden Ansprüche, **dadurch gekennzeichnet, dass** das Signal der Betriebsgröße (200) in Verfahrensschritt S2 als Zeitverlauf von Messwerten der Betriebsgröße aufgenommen wird, oder als Messwerte der Betriebsgröße als eine mit dem Zeitverlauf korrelierende Größe des Elektromotors (180).

15. Verfahren nach einem der vorstehenden Ansprüche, **dadurch gekennzeichnet, dass** das Signal der Betriebsgröße (200) in dem Verfahrensschritt S2 als Zeitverlauf von Messwerten der Betriebsgröße aufgenommen wird und in einem dem Verfahrensschritt folgenden Verfahrensschritt S2a eine Transformation des Zeitverlaufs der Messwerte der Betriebsgröße in einen Verlauf der Messwerte der Betriebsgröße als eine mit dem Zeitverlauf korrelierende Größe des Elektromotors (180) erfolgt.

16. Verfahren nach einem der vorstehenden Ansprüche, **dadurch gekennzeichnet, dass** die Handwerkzeugmaschine (100) eine Schlagschraubmaschine, insbesondere eine Drehschlagschraubmaschine, ist und der Arbeitsfortschritt ein Schlagbetrieb, insbesondere ein Drehschlagbetrieb, ist.

17. Handwerkzeugmaschine (100), umfassend einen Elektromotor (180), einen Messwertaufnehmer einer Betriebsgröße des Elektromotors (180), und eine Steuerungseinheit (370), **dadurch gekennzeichnet, dass** die Steuerungseinheit (370) zur Durchführung des Verfahrens nach einem der Ansprüche 1 bis 16 eingerichtet ist.

## Claims

1. Method for operating a handheld power tool (100), the handheld power tool (100) comprising an electric motor (180), the method comprising the method steps of:
S1 providing comparative information, comprising the steps of:
S1a providing at least one model signal shape (240), the model signal shape (240) being assignable to progress of work of the handheld power tool (100);
S1b providing a threshold value of correspondence;
S2 ascertaining a signal of an operating variable (200) of the electric motor (180);
S3 comparing the signal of the operating variable (200) with the model signal shape (240) and ascertaining an assessment of correspondence from the comparison, the assessment of correspondence at least partially taking place on the basis of the threshold value of correspondence;
S4 detecting the progress of work at least partially on the basis of the assessment of correspondence ascertained in method step S3;
the providing of comparative information taking place at least partially on the basis of a learning process.

2. Method according to Claim 1, **characterized in that** the learning process includes the performing or reading in of at least one example application of the handheld power tool (100), the at least one example application comprising achievement of specified progress of work of the handheld power tool (100).

3. Method according to Claim 2, **characterized in that** the model signal shape (240) is at least partially provided on the basis of the learning process, and **in that** the learning process comprises the following method steps
| | |
|---|---|
| A1 | ascertaining a signal of an operating variable (200') of the electric motor (180) on the basis of the example application; |
| A2 | determining a model signal shape (240'), assigned to the example application, on the basis of the signal of the operating variable (200') while achieving the specified progress of work; |
| A2' | determining a model signal shape (240'), assigned to the example application, on the basis of the signal of the operating variable (200'), as it is at the time of achieving the specified progress of work. |

4. Method according to Claim 3, **characterized in that** the learning process includes the performing or reading in of at least two example applications, and **in that** the learning process includes the ascertaining of the model signal shape (240) from the two or more model signal shapes (240') assigned to the example applications.

5. Method according to one of Claims 2 to 4, **characterized in that** the threshold value of correspondence is at least partially provided on the basis of the learning process, and **in that** the learning process comprises the following method steps
| | |
|---|---|
| B1 | providing at least one model signal shape (240"), the model signal shape (240") being assignable to progress of work of the handheld power tool (100); |
| B2 | ascertaining a signal of an operating variable (200') of the electric motor (180); |
| B3 | comparing the signal of the operating variable (200') with the model signal shape (240") at a time when a speed of the electric motor (180) is being reduced, in particular at a time when the handheld power tool (100) is being stopped by the user, and ascertaining a threshold value of correspondence assigned to the example application. |

6. Method according to Claim 5, in step B1 the at least one model signal shape being provided by a method according to either of Claims 3 and 4.

7. Method according to either of Claims 5 and 6, **characterized in that** the learning process includes the performing or reading in of at least two example applications, and **in that** the learning process includes the ascertaining of an average value of the threshold value of correspondence from the two or more threshold values of correspondence assigned to the example applications.

8. Method according to one of Claims 2 to 7, **characterized in that** the reading in of the at least one example application includes the reading in of a signal, given by way of example, of an operating variable of the electric motor by the handheld power tool (100).

9. Method according to one of the preceding claims, comprising the method step of
| | |
|---|---|
| S5 | performing a first routine of the handheld power tool (100) at least partially on the basis of the progress of work detected in method step S4. |

10. Method according to Claim 9, **characterized in that** the first routine comprises stopping the electric motor (180) while taking into account a defined and/or predeterminable parameter, in particular a parameter predeterminable by a user of the handheld power tool (100).

11. Method according to either of Claims 9 and 10, **characterized in that** the first routine comprises a change, in particular a reduction and/or an increase, in a speed of the electric motor (180).

12. Method according to Claim 11, **characterized in that** the change in the speed of the electric motor (180) takes place multiply and/or dynamically, in particular staggered over time and/or along a characteristic curve of the change in speed and/or on the basis of the progress of work of the handheld power tool (100), the change in the speed being at least partially determined on the basis of the learning process on the basis of the example applications.

13. Method according to one of the preceding claims, **characterized in that** the operating variable is a speed of the electric motor (180) or an operating variable correlating with the speed.

14. Method according to one of the preceding claims, **characterized in that** the signal of the operating variable (200) is recorded in method step S2 as a progression over time of measured values of the operating variable or as measured values of the operating variable as a variable of the electric motor (180) correlating with the progression over time.

15. Method according to one of the preceding claims, **characterized in that** the signal of the operating variable (200) is recorded in method step S2 as a progression over time of measured values of the operating variable and in a method step S2a following the method step a transformation of the progression over time of the measured values of the operating variable into a progression of the measured values of the operating variable as a variable of the electric motor (180) correlating with the progression over time takes place.

16. Method according to one of the preceding claims, **characterized in that** the handheld power tool (100) is an impact screwdriver, in particular a rotary impact screwdriver, and the progress of work is impact operation, in particular rotary impact operation.

17. Handheld power tool (100), comprising an electric motor (180), a measured-value pickup of an operating variable of the electric motor (180), and a control unit (370), **characterized in that** the control unit (370) is designed for carrying out the method according to one of Claims 1 to 16.

## Revendications

1. Procédé de fonctionnement d'une machine-outil à main (100), la machine-outil à main (100) comprenant un moteur électrique (180), le procédé comprenant les étapes suivantes :
S1 fournir des informations de comparaison, comprenant les étapes suivantes :
S1a fournir au moins une forme de signal modèle (240), la forme de signal modèle (240) pouvant être associée à une progression de travail de la machine-outil à main (100) ;
S1b fournir un seuil de coïncidence ;
S2 déterminer un signal d'une grandeur de fonctionnement (200) du moteur électrique (180) ;
S3 comparer le signal de la grandeur de fonctionnement (200) à la forme de signal modèle (240) et déterminer une évaluation de coïncidence à partir de la comparaison, l'évaluation de coïncidence étant effectuée au moins partiellement sur la base du seuil de la coïncidence ;
S4 reconnaître la progression de travail au moins partiellement sur la base de l'évaluation de la coïncidence déterminée à l'étape de procédé S3 ;
les informations de comparaison étant fournies au moins partiellement sur la base d'un processus d'apprentissage.

2. Procédé selon la revendication 1, **caractérisé en ce que** le processus d'apprentissage comprend l'exécution ou la lecture d'au moins un exemple d'application de la machine-outil à main (100), l'au moins un exemple d'application comprenant l'obtention d'une progression de travail spécifiée de la machine-outil à main (100).

3. Procédé selon la revendication 2, **caractérisé en ce que** la forme de signal modèle (240) est fournie au moins partiellement sur la base du processus d'apprentissage, et **en ce que** le processus d'apprentissage comprend les étapes de procédé suivantes
A1 déterminer un signal d'une grandeur de fonctionnement (200') du moteur électrique (180) sur la base de l'exemple d'application ;
A2 déterminer une forme de signal modèle (240'), associée à l'exemple d'application, sur la base du signal de la grandeur de fonctionnement (200') pendant l'obtention de la progression de travail spécifiée ;
A2' déterminer une forme de signal modèle (240') associée à l'exemple d'application sur la base du signal de la grandeur de fonctionnement (200') telle qu'elle existe à l'instant de l'obtention de la progression de travail spécifiée.

4. Procédé selon la revendication 3, **caractérisé en ce que** le processus d'apprentissage comprend l'exécution ou la lecture d'au moins deux exemples d'applications, et **en ce que** le processus d'apprentissage comprend la détermination de la forme de signal modèle (240) à partir des deux formes de signal modèle (240') ou plus associées aux exemples d'applications.

5. Procédé selon l'une des revendications 2 à 4, **caractérisé en ce que** le seuil de coïncidence est fourni au moins partiellement sur la base du processus d'apprentissage, et **en ce que** le processus d'apprentissage comprend les étapes de procédé suivantes
B1 fournir au moins une forme de signal modèle (240''), la forme de signal modèle (240") pouvant être associée à une progression de travail de la machine-outil à main (100) ;
B2 déterminer un signal d'une grandeur de fonctionnement (200') du moteur électrique (180) ;
B3 comparer le signal de la grandeur de fonctionnement (200') à la forme de signal modèle (240") à l'instant de réduction de la vitesse de rotation du moteur électrique (180), en particulier à l'instant d'arrêt de la machine-outil à main (100) par l'utilisateur et déterminer un seuil de coïncidence associé à l'un des exemples d'applications.

6. Procédé selon la revendication 5, l'au moins une forme de signal modèle étant fournie à l'étape B1 selon un procédé selon l'une des revendications 3 ou 4.

7. Procédé selon l'une des revendications 5 ou 6, **caractérisé en ce que** le processus d'apprentissage comprend l'exécution ou la lecture d'au moins deux exemples d'application, et **en ce que** le processus d'apprentissage contient la détermination d'une valeur moyenne du seuil de coïncidence à partir des deux seuils de coïncidence ou plus associés aux exemples d'applications.

8. Procédé selon l'une des revendications 2 à 7, **caractérisé en ce que** la lecture d'au moins un exemple d'application comprend la lecture d'un exemple de signal d'une grandeur de fonctionnement du moteur électrique par la machine-outil à main (100).

9. Procédé selon l'une des revendications précédentes, comprenant l'étape de procédé suivante
S5 exécuter une première routine de la machine-outil à main (100) au moins partiellement sur la base de la progression de travail reconnue à l'étape de procédé S4.

10. Procédé selon la revendication 9, **caractérisé en ce que** la première routine comprend l'arrêt du moteur électrique (180) avec prise en compte d'un paramètre défini et/ou spécifiable, notamment spécifiable par un utilisateur de la machine-outil à main (100).

11. Procédé selon l'une des revendications 9 ou 10, **caractérisé en ce que** la première routine comprend une modification, en particulier une réduction et/ou une augmentation, de la vitesse de rotation du moteur électrique (180).

12. Procédé selon la revendication 11, **caractérisé en ce que** la modification de la vitesse de rotation du moteur électrique (180) est effectuée en plusieurs fois et/ou de manière dynamique, notamment échelonnée dans le temps et/ou suivant une courbe caractéristique de la variation de vitesse de rotation et/ou sur la base de la progression de travail de la machine-outil à main (100), la variation de vitesse de rotation étant au moins partiellement déterminée sur la base du processus d'apprentissage basé sur les exemples d'application.

13. Procédé selon l'une des revendications précédentes, **caractérisé en ce que** la grandeur de fonctionnement est une vitesse de rotation du moteur électrique (180) ou une grandeur de fonctionnement corrélée à la vitesse de rotation.

14. Procédé selon l'une des revendications précédentes, **caractérisé en ce que** le signal de la grandeur de fonctionnement (200) est acquis à l'étape de procédé S2 sous la forme d'une évolution dans le temps de valeurs de mesure de la grandeur de fonctionnement, ou sous la forme de valeurs de mesure de la grandeur de fonctionnement comme grandeur du moteur électrique (180) en corrélation avec l'évolution dans le temps.

15. Procédé selon l'une des revendications précédentes, **caractérisé en ce que** le signal de la grandeur de fonctionnement (200) est acquis à l'étape de procédé S2 sous la forme d'une évolution dans le temps de valeurs de mesure de la grandeur de fonctionnement et une transformation de l'évolution dans le temps des valeurs de mesure de la grandeur de fonctionnement en une évolution des valeurs de mesure de la grandeur de fonctionnement est effectuée à une étape de procédé S2a suivant l'étape du procédé en tant que grandeur du moteur électrique (180) qui est en corrélation avec l'évolution dans le temps.

16. Procédé selon l'une des revendications précédentes, **caractérisé en ce que** la machine-outil à main (100) est une machine à vis à percussion, en particulier une machine à vis à percussion rotative, et la progression de travail est un fonctionnement en percussion, notamment un fonctionnement en percussion rotative.

17. Machine-outil à main (100), comprenant un moteur électrique (180), un capteur de valeurs de mesure du moteur électrique (180) et une unité de commande (370), **caractérisée en ce que** l'unité de commande (370) est utilisée pour mettre en œuvre le procédé selon l'une des revendications 1 à 16.
